(19) Europäisches Patentamt
European Patent Office
Office européen des brevets

(11) **EP 2 103 745 A1**

(12) **DEMANDE DE BREVET EUROPEEN**

(43) Date de publication:
**23.09.2009 Bulletin 2009/39**

(51) Int Cl.:
*E02F 3/43* (2006.01)   *E02F 9/20* (2006.01)
*E02F 9/26* (2006.01)   *B25J 9/16* (2006.01)
*G01B 21/04* (2006.01)

(21) Numéro de dépôt: **09290166.9**

(22) Date de dépôt: **06.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **10.03.2008 FR 0801301**

(71) Demandeur: **Westline Sarl**
**78600 Le Mesnil le Roi (FR)**

(72) Inventeurs:
• **Chiorean, Dumitri-Mircea**
**78600 Le Mesnil le Roi (FR)**

• **Chiorean, Rodica-Mariana**
**78600 Le Mesnil le Roi (FR)**
• **Chiorean, Viad**
**78600 Le Mesnil le Roi (FR)**
• **Bertola, Alessandro**
**21020 Taino (IT)**
• **Bonetti, Gianmarco**
**28053 Castelletto Sopra Ticino (IT)**

(74) Mandataire: **Debay, Yves**
**Cabinet Debay**
**126 Elysée 2**
**78170 La Celle Saint Cloud (FR)**

(54) **Procédé et système de calibration automatique des engins de terrassement**

(57)    La présente invention concerne un procédé de calibration automatique d'un engin de terrassement équipé d'un bras articulé à l'extrémité duquel est positionné un outil de travail. Le procédé de calibration consiste, après une série de déplacements (1001) de l'extrémité de l'outil de travail de l'engin entre des points de référence disposés selon une configuration géométrique définie, de recueillir des données de positions angulaires relatives aux différents organes articulés, ces données étant délivrées par des dispositifs détecteurs positionnés de façon imprécise (1000) sur chaque organe articulé puis envoyées (1002) à un système de calibration de l'engin afin d'exécuter un module de calcul du système de calibration pour déterminer (1003) à l'aide de données d'entrées connues (1012), des paramètres inconnus, qui une fois déterminés, permettent la commande (1006) de l'affichage de voyants lumineux servant à guider l'opérateur pour le déplacement en profondeur horizontale et/ou verticale de l'outil de travail.

Fig. 1

Printed by Jouve, 75001 PARIS (FR)

**Description**

La présente invention concerne le domaine de la calibration ou de l'étalonnage d'engins de terrassement équipés d'un bras articulé à l'extrémité duquel est disposé un outil d'excavation ou analogue. L'invention concerne plus particulièrement un procédé et un système de calibration automatique des engins de terrassement tels que des pelleteuses, des excavateurs, etc. L'invention concerne également un engin de terrassement équipé d'un système de calibration automatique et une utilisation du procédé de calibration.

Dans les engins de terrassement, il est connu d'avoir des engins, tels que ceux représentés dans le brevet US 6 140 747, munis d'un bras articulé sur un ensemble autotracté, le bras articulé étant commandé par des vérins hydrauliques et réalisant une ligne brisée modifiable à l'extrémité de laquelle est positionné un outil d'excavation ou un outil analogue tel qu'un godet, lui- même commandé en position angulaire par un vérin hydraulique. Des capteurs angulaires positionnés avec précision aux articulations du bras de l'engin, comme c'est le cas dans le document US 6 140 747, ou fixés sur le bras permettent de déterminer les angles entre l'engin et le premier élément articulé formant le bras, entre le premier et le deuxième élément articulé formant le bras, et entre le deuxième élément articulé formant le bras et l'outil. Connaissant ces valeurs angulaires et les dimensions exactes des éléments formant le bras articulé de l'engin entre les différents points d'articulation du bras, il est parfaitement possible de commander les déplacements de l'engin à l'aide de manettes permettant de décider des déplacements des vérins hydrauliques et par conséquent, de fixer la position du godet. Toutefois, dans de tels dispositifs, il est nécessaire d'effectuer un étalonnage des circuits de commande de l'engin pour être sûr de la position finale du godet, même lorsque l'on connaît précisément les angles et des longueurs des éléments d'articulation formant le bras.

L'objet de la présente invention est totalement différent en ce sens que la position des capteurs angulaires sur les éléments d'articulation formant le bras de l'engin n'est pas imposée de façon précise et sera déterminée ultérieurement. Ces capteurs angulaires sont fixés au moyen d'aimants sur les éléments d'articulation formant le bras de l'engin et transmettent une information supposée représenter l'angle formé par la verticale et l'axe de l'élément d'articulation sur lequel est disposé le capteur angulaire.

Toutefois, le positionnement des capteurs angulaires sur les éléments d'articulation formant le bras de l'engin est réalisé par l'opérateur de façon imprécise. Par conséquent, il existe un décalage angulaire entre l'axe définissant la position du capteur angulaire et l'axe définissant chaque élément d'articulation.

En outre, sur certains systèmes existants, il est possible de placer les capteurs angulaires avec un décalage angulaire et de le déterminer ensuite. Mais la détermination du décalage angulaire est fastidieuse puisqu'il faut maintenir le bras articulé ou l'outil de travail dans une position où l'angle est parfaitement connu. Il faut alors entrer manuellement la valeur connue dans le boîtier de contrôle du système qui va déterminer le décalage angulaire avec la valeur mesurée par le capteur angulaire.

La présente invention a pour but de remédier à un ou plusieurs des inconvénients de l'art antérieur et propose un procédé de calibration automatique d'un engin de terrassement ou de travaux équipé d'un bras articulé à l'extrémité duquel est disposé un outil d'excavation ou analogue permettant d'une part, de supprimer les réglages fastidieux obligeant les opérateurs à se déplacer et d'autre part, de mesurer avec précision les longueurs des différents organes articulés (bras et outil de travail) de l'engin de terrassement.

Pour atteindre ce but, le procédé de calibration automatique d'un engin de terrassement équipé d'un bras articulé dans un plan et ne pouvant tourner autour de son axe de symétrie à l'extrémité duquel est positionné un outil de travail, est **caractérisé en ce que** le procédé de calibration consiste, après une série de déplacements de l'extrémité de l'outil de travail entre des points de référence n'appartenant pas à l'engin de terrassement disposés selon une configuration géométrique définie, de recueillir des données de positions angulaires relatives aux différents organes articulés de l'engin de terrassement, ces données de positions angulaires étant délivrées par des dispositifs détecteurs amovibles et interchangeables positionnés de façon imprécise sur chaque organe articulé de l'engin puis envoyées par une communication sans fil à un système de calibration de l'engin de terrassement afin d'exécuter un module de calcul du système de calibration de l'engin pour déterminer à l'aide de données d'entrées connues représentatives des points de référence, des paramètres inconnus représentatifs des imprécisions de positionnement des détecteurs.

Avantageusement, la présente invention permet à un conducteur d'engins de travaux publics de préparer son engin au travail sans faire intervenir de technicien spécialisé.

Selon une autre particularité, les paramètres inconnus correspondent aux longueurs des organes articulés de l'engin et aux décalages angulaires de chaque dispositif détecteur par rapport à l'organe articulé sur lequel le dispositif détecteur est positionné.

Selon une autre particularité, l'étape de calcul et la détermination des paramètres inconnus consiste à résoudre un système d'équations mathématiques au moyen d'un programme approprié de résolution d'équations mathématiques exécuté par le module de calcul du système de calibration de l'engin.

Selon une autre particularité, les équations mathématiques sont issues de relations mathématiques définissant les données représentatives de la position verticale et de la position horizontale de l'outil de travail en fonction des paramètres inconnus.

Selon une autre particularité, les données d'entrées connues pour une configuration géométrique donnée correspondent aux distances entre les plans et/ou lignes de référence sur lesquels sont positionnés les points de référence de ladite configuration géométrique et/ou aux distances entre les points de référence de ladite configuration géométrique et/ou éventuellement aux coordonnées des points de référence de ladite configuration géométrique, ces données d'entrées connues étant saisies par un opérateur puis mémorisées dans la mémoire du système de calibration pour correspondre à une position de l'extrémité de l'outil en vue de leur utilisation pour le calcul des paramètres inconnus en les associant avec les données de positions angulaires mesurées correspondantes à chaque position prise par l'extrémité de l'outil de travail.

Selon une autre particularité, les configurations géométriques correspondent à des combinaisons géométriques de plans ou lignes de référence verticaux ou horizontaux ou orientés selon un angle connu, sur lesquels sont positionnés au moins un point de référence, les plans ou lignes de référence des configurations géométriques étant obtenus au moyen d'un dispositif laser ou par le déplacement d'une tige sur laquelle sont positionnés des marqueurs correspondant aux points de référence ou encore par tout type de dispositif permettant de former un plan ou ligne de référence.

Selon une autre particularité, la résolution du système d'équations mathématiques est effectuée par un programme exécuté par le module de calcul du système de calibration résolvant un système matriciel contenant pour la configuration géométrique donnée et pour chaque position de ladite configuration géométrique prise par l'extrémité de l'outil de travail, les données de positions angulaires de chaque organe articulé de l'engin et les données d'entrées connues relatives à cette configuration géométrique ou utilisant une ou plusieurs méthodes mathématiques appropriées.

Selon une autre particularité, le procédé de calibration peut comporter une étape de détermination et d'élimination des données de positions angulaires erronées qui sont réalisées par un programme exécuté par le module de calcul du système de calibration en utilisant une ou plusieurs méthodes mathématiques appropriées, les données d'entrées connues associées aux données de positions angulaires erronées étant éliminées de l'ensemble des données nécessaires pour le calcul des paramètres inconnus.

Selon une autre particularité, dans le cas où le dispositif détecteur est disposé sur un des éléments formant le compas d'articulation entre l'outil de travail et le bras de l'outil de travail, une étape préalable au procédé de calibration est éventuellement réalisée et consiste à déplacer un des dispositifs détecteurs sur l'outil de travail puis à déplacer en rotation l'outil de travail autour de son axe d'articulation sur différents points de référence, le dispositif détecteur disposé sur un des éléments du compas et le dispositif détecteur déplacé fournissant, pour chaque déplacement de l'outil de travail, au système de calibration les données de positions angulaires mesurées puis le module de calcul du système de calibration effectuant au moyen d'un programme approprié, une comparaison entre les données de positions angulaires fournies pas ces dispositifs détecteurs de façon à obtenir une relation mathématique servant à déterminer le décalage angulaire du dispositif détecteur disposé sur un des éléments formant le compas d'articulation.

Un autre but est atteint en proposant un système de calibration automatique d'un engin de terrassement équipé d'un bras articulé à l'extrémité duquel est positionné un outil de travail, un dispositif détecteur autonome équipé de capteur(s) de position angulaire étant positionné de façon imprécise et amovible et interchangeables sur chaque organe articulé, le système de calibration permettant de mettre en oeuvre le procédé de calibration automatique selon l'invention, **caractérisé en ce que** le système de calibration comporte un boîtier sur la face avant duquel est prévue une interface utilisateur équipée d'un écran d'affichage associé à un clavier et d'un bouton de déclenchement de la mesure puis d'envoi et de mémorisation des données de positions angulaires fournies par les dispositifs détecteurs, le boîtier comportant à l'intérieur :

- un récepteur de communication sans fil destiné à recevoir les signaux représentatifs des données de positions angulaires transmis par les différents dispositifs détecteurs ;

- une mémoire destinée à stocker les données mesurées par les dispositifs détecteurs, les données d'entrées connues saisies par l'opérateur sur le clavier de l'interface utilisateur, ainsi que les paramètres de calibration une fois déterminés ;

- un module de calcul destiné, au moyen d'un programme approprié de résolution d'équations mathématiques, à calculer et déterminer les paramètres inconnus, au moyen des données d'entrées connues et mémorisées dans la mémoire et des données de positions angulaires mesurées et reçues.

Selon une autre particularité, après la calibration, le module de calcul est apte à fournir des informations calculées au moyen des paramètres de calibration déterminés et de profil(s) de travail choisi(s) par l'opérateur à un module de commande de l'affichage de voyants lumineux d'un système de guidage de l'engin pour guider l'opérateur lors du déplacement du godet ou de tout autre moyen d'affichage permettant l'assistance au conducteur.

Selon une autre particularité, l'écran, commun au système de calibration et au système de guidage de l'engin, permet d'afficher différents profils pouvant être choisi par l'opérateur pour la commande de l'outil de travail après la calibration, le profil choisi et les informations nécessaires à la calibration de l'outil de travail et le clavier, commun au système de calibration et au système de guidage de l'engin, permet à l'opérateur de choisir le profil de travail, de saisir des informations relatives aux données d'entrées connues et de validation des paramètres de calibration ainsi que des consignes de commande de l'outil de travail.

Selon une autre particularité, dans le cas où le dispositif détecteur est disposé sur un des éléments formant le compas d'articulation entre l'outil de travail et le bras de l'outil de travail, le module de calcul comporte un programme permettant avant la calibration de déterminer une relation mathématique pour déterminer le décalage angulaire du dispositif détecteur disposé sur un des éléments formant le compas d'articulation à partir de la comparaison de données de positions angulaires fournies par le dispositif détecteur disposé sur un des éléments du compas et le dispositif détecteur déplacé sur l'outil de travail.

Un autre but est atteint en proposant un engin de terrassement équipé d'un bras articulé à l'extrémité duquel est positionné un outil de travail, **caractérisé en ce qu'**il comporte au moins un dispositif détecteur autonome équipé de capteur(s) de position angulaire à communication sans fil, le dispositif détecteur étant positionné de façon imprécise, amovible et interchangeable sur chaque organe articulé, des manettes de commandes pour commander manuellement l'engin et un système de calibration automatique selon l'invention, disposé dans la cabine de l'engin de terrassement.

Selon une autre particularité, un détecteur laser peut être disposé à l'extrémité de l'outil de travail pour déterminer le moment où l'extrémité de l'outil de travail est positionnée sur un point de référence d'un plan ou ligne laser de référence servant à la calibration et ainsi déclencher automatiquement la mesure puis l'envoi et la mémorisation des données de position angulaires fournies par les dispositifs détecteurs, dans le cas où les plans ou lignes de référence des configurations géométriques définies servant à la calibration sont réalisés par des dispositifs lasers.

Selon une autre particularité, le dispositif détecteur est équipé d'un module de communication pour envoyer un ou des signaux de déclenchement de mesure des données de position angulaires à destination des dispositifs détecteurs.

Selon une autre particularité, un dispositif récepteur laser peut être disposé de façon imprécise sur un des bras articulés de l'engin pour détecter une hauteur d'un plan ou ligne laser de référence, dans le cas où des plans ou lignes lasers de référence servent à la commande de l'outil de travail après la calibration.

Selon une autre particularité, le dispositif récepteur laser comprend un module de communication pour envoyer le ou les signaux d'émission et ainsi transmettre des données de détection de faisceau laser à un système de guidage de l'engin.

Selon une autre particularité, le plan ou ligne de référence est réalisé par un dispositif laser et détecté par un dispositif récepteur laser disposé sur un des éléments articulés de l'engin, cette détection pouvant nécessiter une étape, additionnelle à la calibration, de détermination des positions axiale, longitudinale.

Selon une autre particularité, l'étape additionnelle à la calibration consiste à réaliser, pour différentes configurations angulaires prises par les éléments articulés et l'outil de travail, le croisement entre le plan ou ligne de référence et l'extrémité de l'outil de travail, puis le croisement de ce même plan ou ligne de référence avec le dispositif récepteur laser pour fournir au module de calcul du système de calibration de l'engin une série d'équations liant la position du dispositif détecteur laser à la géométrie du système formé par les éléments articulés et l'outil de travail, le module de calcul du système de calibration étant apte à déterminer, via un programme approprié de résolution d'équations mathématiques, les paramètres inconnus axiale et longitudinale de position du dispositif récepteur laser sur son élément articulé.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :

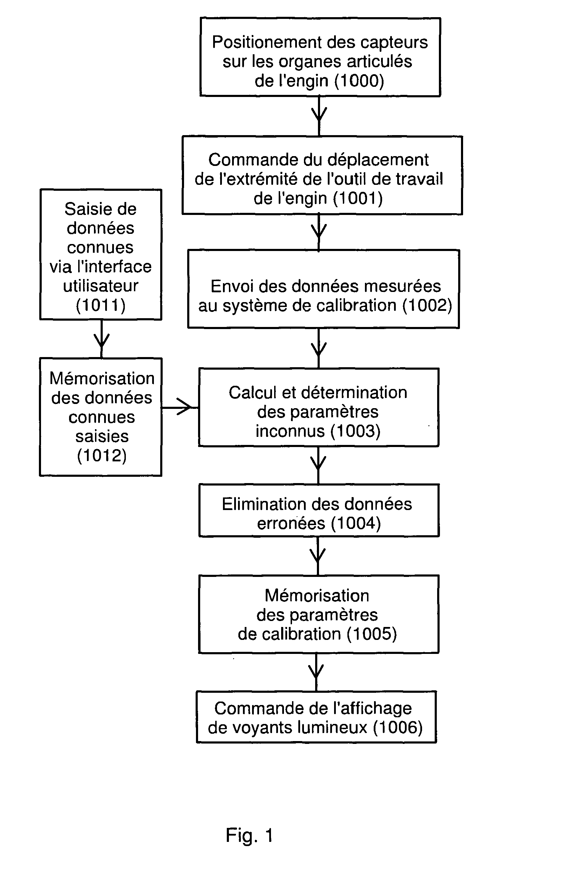

- la figure 1 illustre le procédé de calibration automatique d'un engin de travaux selon l'invention ;

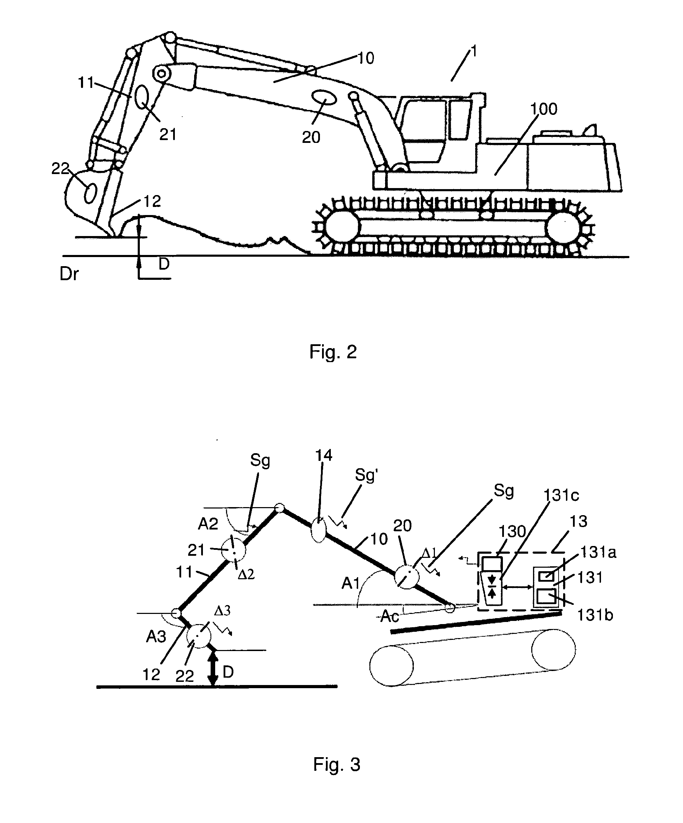

- la figure 2 représente un engin de travaux équipé de dispositifs détecteurs sans câble servant à calibrer l'engin de travaux conformément à l'invention ;

- la figure 3 illustre un engin de travaux équipé de dispositifs détecteurs sans câble, servant à la calibration automatique de l'engin de travaux et à la commande de la profondeur verticale et/ou horizontale de l'outil de travail de type godet via l'utilisation de relations mathématiques ;

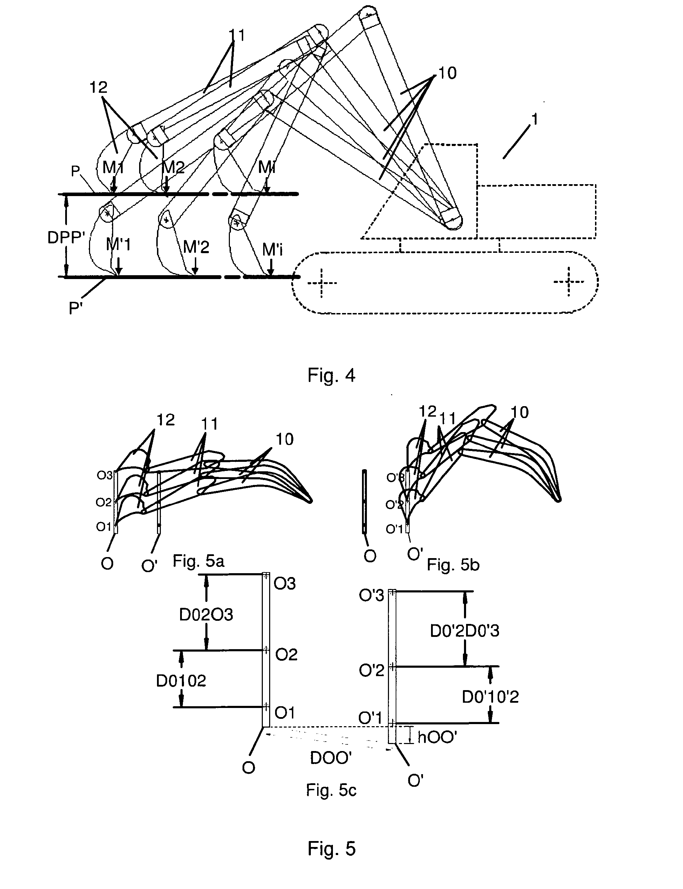

- la figure 4 illustre un mode préféré de réalisation de l'étape de déplacement de l'extrémité de l'outil de travail de type godet de l'engin de travaux du procédé de calibration automatique selon l'invention, ce mode de réalisation préféré consistant à déplacer l'extrémité de l'outil de travail de l'engin de travaux à différents points de référence disposés sur deux plans ou lignes de référence horizontaux et parallèles entre eux ;

- la figure 5 illustre une première variante de réalisation de l'étape de déplacement de l'extrémité de l'outil de travail de l'engin de travaux du procédé de calibration automatique selon l'invention, cette première variante consistant à déplacer l'extrémité de l'outil de travail de l'engin de travaux à différents points de référence disposés sur une première ligne de référence verticale (ce déplacement étant illustré à la figure 5a), puis à différents points de référence disposés sur une autre ligne de référence verticale et parallèle à la première ligne de référence (le déplacement étant représenté à la figure 5b) ;

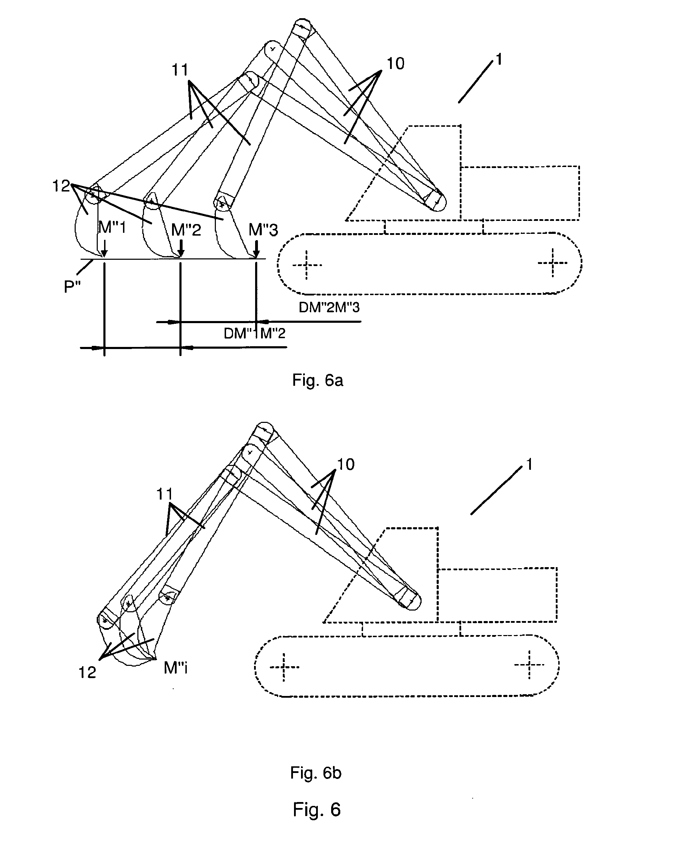

- la figure 6 illustre une deuxième variante de réalisation de l'étape de déplacement de l'extrémité de l'outil de travail de l'engin de travaux du procédé de calibration automatique selon l'invention, cette deuxième variante consistant à déplacer l'extrémité de l'outil de travail de l'engin de travaux à différents points de référence disposés sur un plan ou ligne de référence horizontal(e) (ce déplacement étant illustré à la figure 6a), puis pour chaque point de référence, à faire pivoter l'extrémité de l'outil de travail de l'engin de travaux autour de ces points de référence (le pivotement étant représenté à la figure 6b) ;

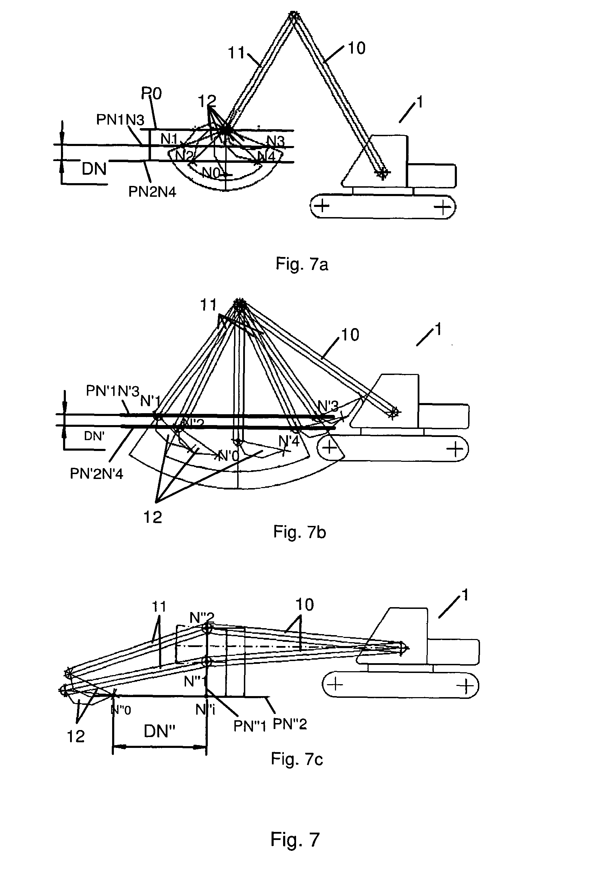

- la figure 7 illustre une troisième variante de réalisation de l'étape de déplacement de l'extrémité de l'outil de travail de l'engin de travaux du procédé de calibration automatique selon l'invention, cette troisième variante consistant à déplacer indépendamment et successivement chaque organe articulé de l'engin de travaux ;

  o la figure 7a illustrant le déplacement de l'extrémité de l'outil en 4 points disposés deux à deux respectivement sur deux plans ou lignes de référence horizontaux et parallèles entre eux, le bras de support et le bras de godet restant fixes lors du déplacement ;

  o la figure 7b illustrant le déplacement de l'extrémité du bras de godet en 4 points de référence disposés deux à deux respectivement sur deux plans ou lignes de référence horizontaux et parallèles entre eux, le bras de support restant fixe lors du déplacement ;

  o la figure 7c illustrant le déplacement de l'articulation du bras de support et du bras de godet en deux points de référence, ces deux points de référence étant disposés sur un plan ou ligne de référence vertical(e) et perpendiculaire à un autre plan ou ligne de référence horizontal(e) comportant un point de référence sur lequel l'extrémité de l'outil est positionnée et fixe lors du déplacement ;

- la figure 8 illustre l'orientation des angles nécessaires pour calculer correctement la position verticale en profondeur de l'outil de travail de type godet ; et

- la figure 9 représente le système de calibration automatique de l'engin de travaux selon l'invention ;

- la figure 10 illustre l'étape préalable au procédé de calibration permettant de déterminer le décalage angulaire d'un dispositif détecteur disposé sur un des éléments formant le compas d'articulation entre le godet et le bras de godet.

En référence aux figures 1, 2 et 3, le procédé selon l'invention s'applique aux engins d'excavation (1) et plus généralement à tout engin de travaux ou de terrassement équipé d'un bras (10, 11) articulé à l'extrémité de laquelle est positionné un outil de travail (12). Le procédé de calibration automatique de l'engin de travaux (1) permet, après une série de déplacements (1001) de l'extrémité de l'outil de travail (12) entre des points de référence disposés selon une configuration géométrique définie, de recueillir des données de positions angulaires ($\beta_i$) relatives aux différents organes articulés (10, 11, 12) de l'engin de terrassement (1) tel qu'une pelleteuse, ces données de positions angulaires ($\beta_i$) étant délivrées (1002) par des dispositifs détecteurs (20, 21, 22) positionnés (1000) de façon imprécise sur chaque organe articulé (10, 11, 12) de l'engin (1) puis d'exécuter un module de calcul (132) d'un système de calibration (13) de l'engin (1) pour déterminer (1003) à l'aide de données d'entrées connues (1012), des paramètres inconnus, à savoir les longueurs (L1, L2, L3) des organes articulés de l'engin et les décalages angulaires ($\theta1$, $\theta2$, $\theta3$) de chaque dispositif détecteur (20, 21, 22) par rapport à l'organe articulé (10, 11, 12) sur lequel il est positionné. Ces paramètres inconnus une fois déterminés, et éventuellement après élimination des données d'entrées erronées (1004), permettent via un programme de commande de l'affichage de voyants lumineux prévus sur une interface utilisateur du système de guidage de l'engin (1) de guider l'opérateur pour réaliser son travail d'excavation.

De façon avantageuse, l'invention permet à un conducteur d'engins de travaux publics de préparer son engin (1) au travail sans faire intervenir de technicien spécialisé.

Dans ce qui suit et de manière non limitative, la description fait référence à un engin d'excavation (1) dont le bras articulé comporte deux éléments articulés (10, 11) et un outil de travail (12). De manière non limitative, l'invention s'applique également aux engins d'excavation dont le bras articulé comporte 3, 4 ou plus d'éléments articulés.

Typiquement, ce type d'engin (1) comprend un châssis (100), un bras de support (10) attaché de façon pivotante sur le châssis (100), un bras de godet (11) ayant une première extrémité et une deuxième extrémité, la première extrémité étant attachée de façon pivotante sur le bras support (10), un outil de travail de type godet (12) attaché de façon pivotante sur la deuxième extrémité du bras de godet (11), et un système actionneur tel que des vérins hydrauliques d'actionnement recevant des signaux de commande et permettant d'actionner le bras de support (10), le bras de godet (11) et le godet (12). Les signaux de commande sont initiés via des manettes de commande (131c) situées de préférence à l'intérieur d'une cabine de pilotage de l'engin d'excavation (1).

Des dispositifs détecteurs (20, 21, 22) sont disposés de façon imprécise sur les différents organes articulés (10, 11, 12) de l'engin d'excavation (1). Dans un mode de réalisation, un premier dispositif détecteur (20) est positionné de façon imprécise sur le bras de support (10), un deuxième dispositif détecteur (21) est positionné de façon imprécise sur le bras de godet (11) et un troisième dispositif détecteur (22) est positionné de façon imprécise sur l'outil de type godet (12) de l'engin d'excavation (1).

Chaque dispositif détecteur (20, 21, 22) détermine, au moyen d'un module électronique à capteur de position angulaire prévu au sein de chaque dispositif détecteur (20, 21, 22), l'angle formé par son axe de symétrie respectif ($\Delta 1$, $\Delta 2$, $\Delta 3$) et un plan ou direction de référence, dans l'exemple représenté, par rapport à la verticale.

Pour s'affranchir des câbles, ces données de positions angulaires sont avantageusement envoyées par les dispositifs détecteurs (20, 21, 22) à l'aide d'un émetteur à interface sans fil, par exemple, dans un message radio. Un message radio se diffusant de façon omnidirectionnelle est préféré à un message infrarouge qui nécessite un envoi directionnel de l'information. L'émission radio est de préférence réalisée pendant un temps d'émission réduit. Les temps d'émission peuvent être synchronisés entre eux pour les différents dispositifs détecteurs (20, 21, 22). Cette fonctionnalité permet une économie d'énergie. Les émetteurs utilisent, par exemple, des ondes radio à une fréquence déterminée. Toute autre communication à courte ou moyenne distance, sans fil, peut être utilisée.

Ces dispositifs détecteurs (20, 21, 22) sont alimentés chacun par une source d'alimentation autonome prévue à l'intérieur de chaque dispositif détecteur (20, 21, 22). Cette source d'alimentation autonome est, par exemple et de manière non limitative, une batterie chargée à l'aide d'un ou plusieurs panneaux solaires. Une batterie auxiliaire conventionnelle de faible capacité peut être prévue dans chaque dispositif détecteur (20, 21, 22) pour suppléer pendant un temps réduit la batterie principale chargée via les panneaux solaires.

En outre, chaque dispositif détecteur (20, 21, 22) comporte au moins une face d'accolage qui est dotée d'éléments de fixation sur les organes articulés (10, 11, 12) de l'engin d'excavation (1). Ces éléments de fixation assurent un maintien de la face d'accolage accolée contre la surface plane en mouvement de chaque organe articulé (10, 11, 12) de l'engin d'excavation (1). Les éléments de fixation de la face d'accolage des dispositifs détecteurs (20, 21, 22) sont des éléments permettant une fixation amovible. Chaque dispositif détecteur (20, 21, 22) peut aisément être positionné, enlevé et repositionné car il est simplement aimanté sur son support.

On comprend donc que les dispositifs détecteurs (20, 21, 22) sont autonomes et peuvent être initialement montés de façon indépendante de tout autre équipement sur son support. Les dispositifs détecteurs (20, 21, 22) sont ainsi tous interchangeables au départ, avant la phase d'apprentissage ou de paramétrage servant à spécialiser et identifier la position sur les différents organes articulés (10, 11, 12) de l'engin d'excavation (1) de chacun de ces dispositifs détecteurs (20, 21, 22). Pour permettre la spécialisation, l'émetteur à interface sans fil de chaque dispositif détecteur (20, 21, 22) peut transmettre un identifiant spécifique qui va être mémorisé dans une mémoire (133) du système de calibration (13) de l'engin d'excavation (1). Cet identifiant est, par exemple, transmis dans un signal d'émission (Sg) tel qu'un message radio. Une synchronisation initiée depuis le système de calibration (13) de l'engin d'excavation (1) peut aussi permettre de considérer l'ordre de réception des signaux d'émission (Sg) et ainsi d'identifier l'origine de chacun des signaux d'émission (Sg).

Les données de positions angulaires ($\beta_i$) fournies par les dispositifs détecteurs (20, 21, 22) sont traitées par le système de calibration (13) de l'engin d'excavation (1). Chaque dispositif détecteur (20, 21, 22) dispose d'un module de communication sans fil pour envoyer les informations relatives aux positions angulaires ($\beta_i$) vers un récepteur de communication sans fil (130) du système de calibration (13) de l'engin d'excavation (1). Ce système de calibration (13) peut être alimenté par l'alimentation présente dans la cabine de l'engin d'excavation (1). Le récepteur sans fil (130) du système de calibration (13) utilise par exemple, des ondes radio à une fréquence déterminée. Toute autre communication à courte ou moyenne distance, sans fil, peut être utilisée.

De manière non limitative, des dispositifs détecteurs (20, 21, 22) filaires ou non, aimantés ou non peuvent également être utilisés.

La pose (étape 1000, figure 1) de chaque dispositif détecteur (20, 21, 22) est effectuée, par un opérateur ou utilisateur de l'engin d'excavation (1), de façon imprécise sur chaque organe articulé (10, 11, 12) de l'engin d'excavation (1). Les angles (A1, A2, A3) respectifs, illustrés à la figure 3, et servant à déterminer la profondeur verticale (D) et/ou horizontale (H) atteinte par l'outil de travail de type godet (12) peuvent ainsi être connus dans la mesure où la position angulaire de chaque dispositif détecteur (20, 21, 22) par rapport respectivement au bras (10, 11) et godet (12) qui le supporte est un paramètre connu.

En effet, en référence à la figure 3, la position verticale en profondeur (D) de l'outil de travail de type godet (12) de l'engin d'excavation (1) par rapport à une profondeur de référence (Dr) peut se calculer selon la relation mathématique suivante :

$$D = \sum_{i=1}^{n} (L_i . \sin(A_i)) - Dr \qquad \text{(F1)}$$

où

- n correspond au nombre d'organes articulés (10, 11, 12) de l'engin d'excavation (1) ;

- $L_i$ correspond à la longueur de chaque organe articulé (10, 11, 12) de l'engin d'excavation (1), dans l'exemple représenté, L1 est la longueur du bras de support (10), L2 est la longueur du bras de godet (11) et L3 est la longueur du godet (12) ; et

- $A_i$ correspond à l'angle formé par l'axe de chaque organe articulé (10, 11, 12) de l'engin d'excavation (1) avec l'horizontale, dans l'exemple représenté A1 correspond à l'angle formé par l'axe du bras de support (10) avec l'horizontale, A2 correspond à l'angle formé par l'axe du bras de godet (11) avec l'horizontale et A3 correspond à l'angle formé par l'axe du godet (12) avec l'horizontale.

De manière non limitative, la profondeur de référence (Dr) peut être l'horizontale passant par le point d'articulation du bras de support (10) avec le châssis (100) de l'engin d'excavation (1) ou encore l'horizontale passant par le point de contact du châssis (100) de l'engin d'excavation (1) avec le sol.

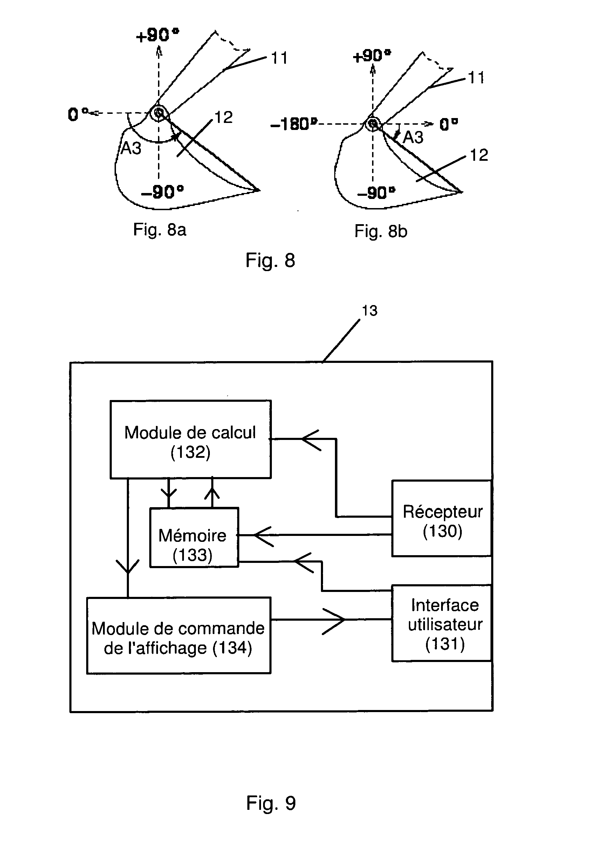

Il est à noter que la relation mathématique précédente (F1) suppose que l'orientation des angles ($A_i$) soit donnée soit dans le sens trigonométrique comme indiqué en figure 8a soit dans le sens horaire comme indiqué en figure 8b.

En outre, puisque les dispositifs détecteurs (20, 21, 22) sont positionnés (1000) de façon imprécise sur les organes articulés (10, 11, 12) de l'engin d'excavation (1), un décalage angulaire supplémentaire ($\theta_i$) doit être introduit pour chaque angle ($A_i$) tel que $\beta i = A_i + \theta_i$ où $\beta_i$ correspond à l'angle détecté par les dispositifs détecteurs (20, 21, 22) disposés respectivement sur chaque organe articulé (10, 11, 12) de l'engin d'excavation (1) et $A_i$ est l'angle réel nécessaire pour l'équation précédente (F1).

La relation mathématique (F1) peut être reformulée de façon à faciliter le calcul et la détermination (1003, figure 1) des paramètres inconnus ($L_i$ et $\theta_i$).

Pour simplifier l'écriture des équations suivantes, nous considérerons une hauteur h = D + Dr soit :

$$h = \sum_{i=1}^{n} (L_i . \sin(A_i)) \qquad \text{(F2)}$$

F2 peut se réécrire comme suit :

$$h = \sum_{i=1}^{n} L_i . \sin(\beta_i - \theta_i)$$

$$h = \sum_{i=1}^{n} L_i . (\sin(\beta_i)\cos(\theta_i) - \cos(\beta_i)\sin(\theta_i))$$

$$h = \sum_{i=1}^{n} L_i \cos(\theta_i).\sin(\beta_i) - L_i \sin(\theta_i).\cos(\beta_i)$$

En définissant deux nouveaux paramètres inconnus $a_i = L_i \cos(\theta_i)$ et $b_i = -L_i \sin(\theta_i)$, on obtient l'équation suivante (F3) :

$$h = \sum_{i=1}^{n} a_i.\sin(\beta_i) + b_i.\cos(\beta_i) \qquad (F3)$$

Naturellement, la profondeur horizontale (H) de l'outil de travail de type godet (12) de l'engin d'excavation (1) peut se calculer de façon analogue. L'équation non linéaire (F'2) associée à l'équation non linéaire (F2) s'écrit comme suit :

$$H = \sum_{i=1}^{n} (L_i.\cos(A_i)) \qquad (F2')$$

et l'équation linéaire (F3') correspondante, en utilisant les nouveaux paramètres $a_i$ et $b_i$ décrits précédemment, s'écrit comme suit :

$$H = \sum_{i=1}^{n} a_i.\cos(\beta_i) - b_i.\sin(\beta_i) \qquad (F3')$$

L'invention permet ainsi de déterminer, préalablement à la commande de l'outil de travail (12) pour son travail, les paramètres inconnus des relations mathématiques précédentes, à savoir :

- les longueurs (L1, L2, L3) respectivement du bras de support (10), du bras de godet (11) et du godet (12) ;

- les décalages angulaires (θ1, θ2, θ3) des dispositifs détecteurs (20, 21,22).

Il est à noter qu'une fois déterminés, ces paramètres (L1, L2, L3, $\theta_i$) restent constants lors du fonctionnement de l'engin d'excavation (1) ce qui permettra de guider précisément l'opérateur pour travailler à une profondeur verticale et/ou horizontale du godet (12) déterminée.

Pour déterminer les données relatives à la position angulaire (βi) de chaque dispositif détecteur (20, 21, 22) par rapport à la verticale, chaque dispositif détecteur (20, 21, 22) comporte un capteur de position angulaire incorporé dans un équipement électronique. De manière non limitative, n'importe quel équipement de mesure de position angulaire adapté peut être embarqué dans ces dispositifs détecteurs (20, 21, 22).

Une fois que chaque dispositif détecteur (20, 21, 22) est positionné (étape 1000, figure 1) de façon imprécise sur le bras de support (10), le bras de godet (11) et l'outil de type godet (12), un opérateur commande le déplacement (étape 1001, figure 1) des organes articulés (10, 11, 12) de l'engin d'excavation (1), au moyen des manettes de commandes (131c) de l'engin (1), sur une pluralité de points de référence prédéfinis disposés selon une configuration géométrique définie.

De manière non limitative, les points de référence peuvent être disposés selon différentes configurations géométriques réalisées au moyen d'au moins un dispositif de type laser approprié ou encore d'une tige sur laquelle sont prévus des marqueurs ou de tout autre dispositif analogue formant un plan ou ligne de référence.

Les distances entre plans ou lignes de référence sur lesquels sont positionnés les points de référence des différentes configurations géométriques ou les distances entre les points de référence ou encore les coordonnées de points de référence sont connues et forment ce qu'on appellera par la suite les données d'entrées connues. Ces données d'entrées connues sont saisies par l'opérateur sur le clavier (131b) de l'interface utilisateur (131) du système de calibration (13) puis mémorisés dans la mémoire (133) du système de calibration (13) de l'engin d'excavation. Ces informations mémorisées serviront, comme nous le verrons par la suite, pour le calcul et la détermination des paramètres inconnus ($L_i$ et $\theta_i$).

Nous allons à présent décrire des exemples de configurations géométriques des points de référence sur lesquels sont positionnées les extrémités des organes articulés (10, 11, 12) de l'engin d'excavation (1). De manière non limitative, d'autres configurations géométriques de points de référence sur lesquels est positionnée l'extrémité de l'outil de travail, notamment les dents du godet (12) de l'engin d'excavation (1) pour déterminer les paramètres inconnus ($L_i$ et $\theta_i$), peuvent être envisagées. Les configurations géométriques correspondent à des combinaisons géométriques de plans ou lignes de référence, verticaux ou horizontaux ou encore orientés selon un angle connu.

En référence à la figure 4, dans un mode de réalisation préféré, l'opérateur commande, au moyen de manettes (131c) de l'engin d'excavation (1), le déplacement de l'extrémité de l'outil de type godet (12) sur une première série de points de référence (M1, M2, M3,..., Mi) disposés selon un premier plan ou ligne laser de référence (P) horizontal. Puis, l'opérateur commande le déplacement de l'extrémité de l'outil de type godet (12) sur une autre série de points de référence (M'1, M'2, M'3,..., M'i) disposés selon un deuxième plan ou ligne laser de référence (P') horizontal et parallèle au premier plan ou ligne laser de référence (P). La distance (DPP') entre ces deux plans ou lignes lasers de référence (P, P') est connue, saisie par l'opérateur sur le clavier (131b) puis mémorisée dans la mémoire (133) du système de calibration (13) de l'engin d'excavation (1).

En référence à la figure 5, une première variante de réalisation de l'étape de déplacement (1001, figure 1) des organes articulés (10, 11, 12) de l'engin d'excavation (1) est prévue.

En référence à la figure 5a, l'opérateur commande, au moyen de manettes (131c) de l'engin d'excavation (1), le déplacement de l'extrémité de l'outil de type godet (12) sur une première série de points de référence, dans l'exemple représenté sur trois points de référence (O1, O2, O3), disposés selon une ligne de référence (O). Cette ligne de référence (O) verticale est formée par une tige sur laquelle sont prévus des marqueurs correspondant aux points de référence (O1, O2, O3). Puis, en référence à la figure 5b, l'opérateur déplace la tige formant la ligne de référence (O) vers le châssis (100) de l'engin d'excavation (1) tout en gardant l'orientation verticale de la tige de façon à ce qu'il commande le déplacement de l'extrémité de l'outil de type godet (12) sur une autre série de points de référence, dans l'exemple représenté sur trois autre points de référence (O'1, O'2, O'3) disposés selon une deuxième ligne de référence (O') verticale et parallèle au premier plan de référence (O). Les distances (DO1O2, DO2O3) ou (DO'1O'2, DO'2O'3) entre respectivement chaque point de référence (O1, 02, 03) ou (O'1, O'2, O'3) sont connues, saisies par l'opérateur sur le clavier (131b) puis mémorisées dans la mémoire (133) du système de calibration (13) de l'engin d'excavation (1). La distance horizontale (DOO') séparant ces deux lignes de référence (O, O') est connue, saisie par l'opérateur sur le clavier (131b) puis mémorisée dans la mémoire (133) du système de calibration (13) de l'engin d'excavation (1) ainsi que le déplacement vertical (hOO') formé par la différence de hauteur entre les deux lignes de référence (O, O') comme illustré à la figure 5c.

Il est à noter que le déplacement vertical (hOO') de la tige peut être déterminé, par exemple, en utilisant une graduation sur la tige formant la ligne de référence (O, O') pour lire ces déplacements par rapport à un faisceau laser horizontal.

En outre, si la tige formant la deuxième ligne de référence (O') est disposée plus haut par rapport à la première position formant la première ligne de référence (O), le déplacement vertical (hOO') est positif sinon il est négatif.

Le déplacement de la tige en direction du châssis (100) de l'engin d'excavation (1) peut être répété plusieurs fois de façon à ce que l'extrémité de l'outil de travail de type godet (12) soit positionnée sur d'autres points de référence disposés selon d'autres lignes de référence ($O_k$) verticales et parallèles à la première ligne de référence (O). De la même manière, les distances entre chaque ligne de référence ($O_k$) sont connues, saisies par l'opérateur sur le clavier (131b) puis mémorisées dans la mémoire (133) du système de calibration (13) de l'engin d'excavation (1).

Il est à noter que les distances entre chaque point de référence qui correspond aux marqueurs sur la tige restent inchangées lors du déplacement de la tige, c'est-à-dire pour chaque ligne de référence ($O_k$).

En référence à la figure 6, une deuxième variante de réalisation de l'étape de déplacement (1001, figure 1) des organes articulés (10, 11, 12) de l'engin d'excavation (1) est prévue.

En référence à la figure 6a, l'opérateur commande, au moyen de manettes (131c) de l'engin d'excavation (1), le déplacement de l'extrémité de l'outil de type godet (12) sur une première série de points de référence, dans l'exemple représenté sur trois points de référence (M"1, M"2, M"3), disposés selon une ligne de référence (P"). Cette ligne de référence (P") horizontale est formée par une autre tige sur laquelle sont prévus des marqueurs correspondant aux points de référence (M"1, M"2, M"3). Les distances (DM"1 M"2, DM"2M"3) entre chaque point de référence (M"1, M"2, M"3) sont connues, saisies par l'opérateur sur le clavier (131 b) puis mémorisées dans la mémoire (133) du système de calibration (13) de l'engin d'excavation (1). Pour chaque point de référence (M"1, M"2, M"3) disposés sur la ligne de référence (P"), l'opérateur peut aussi commander, en référence à la figure 6b, le pivotement de l'extrémité de l'outil de type godet (12) autour de chaque point de référence (M"1, M"2, M"3).

On notera que chaque combinaison angulaire résultant du positionnement de l'extrémité du godet (12) apportera une équation supplémentaire pouvant être utilisée à la résolution du système d'équations, et donc à la résolution des paramètres inconnus.

En référence à la figure 7, une troisième variante de réalisation de l'étape de déplacement (1001, figure 1) des organes articulés (10, 11, 12) de l'engin d'excavation (1) est prévue.

En référence à la figure 7a, dans cette troisième variante de réalisation, l'opérateur commande, au moyen de manettes (131c) de l'engin d'excavation (1), le déplacement de l'extrémité de l'outil de type godet (12) sur une pluralité de points de référence (N0, N1, N2, N3, N4). Deux points de référence (N1 et N3) sont disposés sur un premier plan laser de référence (PN1N3) horizontal et deux autres points de référence (N2 et N4) sont disposés sur un deuxième plan laser de référence (PN2N4) horizontal et parallèle au premier plan de référence (PN1N3). En outre, un autre point de référence (N0) est prévu de façon à ce que le godet (12) prenne une position verticale. La position verticale du godet (12) forme un axe de symétrie pour les points de référence (N1, N3) disposés sur le premier plan laser de référence (PN1N3) et pour les points de référence (N2, N4) disposés sur le deuxième plan laser de référence (PN2N4). Par conséquent, les coordonnées du point (N0) peuvent être déduites aisément à la vue de la configuration géométrique des points de référence (N1, N2, N3, N4) (en effet, l'angle ayant pour centre le point d'articulation du godet (12) sur le bras de godet (11) et formé par le point (N0) et le point de référence (N2) ou (N4) correspond à la moitié de l'angle ayant le même centre et formé par les points (N2) et (N4) ou encore l'angle ayant pour centre le point d'articulation du godet (12) sur le bras de godet (11) et formé par le point (N0) et le point de référence (N1) ou (N3) correspond à la moitié de l'angle ayant le même centre et formé par les points (N1) et (N3)). La distance (DN) entre les deux plans lasers de référence (PN1N3, PN2N4) est connue et mémorisée dans la mémoire (133) du système de calibration (13) de l'engin d'excavation (1). Il est à noter que lors du déplacement de l'extrémité du godet (12), le bras de support (10) et le bras de godet (12) restent fixes.

De façon avantageuse, cette première série de déplacements de l'extrémité du godet (12) de cette troisième variante de réalisation permet grâce aux données de positions angulaires détectées via le dispositif détecteur (22) positionné sur le godet (12), puis transmis au module de calcul (132) du système de calibration (13) et grâce à la distance (DN) mémorisée, de déterminer, dans un premier temps, le décalage angulaire (03) du dispositif détecteur (22) du godet (12) et dans un second temps, la longueur (L3) du godet (12).

Puis, en référence à la figure 7b, l'opérateur commande, au moyen de manettes (131c) de l'engin d'excavation (1), le déplacement de l'extrémité du bras de godet (11) selon une même configuration géométrique des points de référence (N'0, N'1, N'2, N'3, N'4) que celle prévue pour le déplacement de l'extrémité du godet (12), décrite précédemment. En effet, deux points de référence (N'1 et N'3) sont disposés sur un premier plan laser de référence (PN'1N'3) horizontal et deux autres points de référence (N'2 et N'4) sont disposés sur un deuxième plan laser de référence (PN'2N'4) horizontal et parallèle au premier plan laser de référence (PN'1N'3). En outre, un autre point de référence (N'0) est prévu de façon à ce que le bras de godet (11) prenne une position verticale. La distance (DN') entre les deux plans de référence (PN'1N'3, PN'2N'4) est connue et mémorisée dans la mémoire (133) du système de calibration (13) de l'engin d'excavation (1). Il est à noter que lors du déplacement de l'extrémité du bras de godet (11), le bras de support (10) reste fixe.

De façon avantageuse, cette deuxième série de déplacements de l'extrémité du bras de godet (11) de cette troisième variante de réalisation permet grâce aux données de positions angulaires détectées via le dispositif détecteur (21) positionné sur le bras de godet (11), puis transmises au module de calcul (132) du système de calibration (13) et grâce à la distance (DN') mémorisée, de déterminer, dans un premier temps, le décalage angulaire ($\theta$2) du dispositif détecteur (21) du bras de godet (11) et dans un second temps, la longueur (L2) du bras de godet (11).

Enfin, en référence à la figure 7c, l'opérateur commande, au moyen de manettes (131c) de l'engin d'excavation (1), le déplacement de l'extrémité du bras de support (10), c'est-à-dire le point d'articulation entre le bras de support (10) et le bras de godet (11), sur deux points de référence (N"1, N"2) disposés sur un plan laser de référence (PN1") vertical et perpendiculaire à un autre plan laser de référence (PN2") horizontal comportant un point de référence (N"0) sur lequel l'extrémité du godet (12) est positionnée et fixe lors du déplacement de l'extrémité du bras de support (10). La distance (DN") entre le point de référence (N"0) et le point intersection (N"i) des deux plans lasers de référence (PN1", PN2") est connue et mémorisée dans la mémoire (133) du système de calibration (13) de l'engin d'excavation (1).

De façon avantageuse, cette troisième série de déplacements de l'extrémité du bras de support (10) de cette troisième variante de réalisation permet grâce aux données de positions angulaires détectées via le dispositif détecteur (20) positionné sur le bras de support (10), puis transmises au module de calcul (132) du système de calibration (13) et grâce à la distance (DN") mémorisée, de déterminer, dans un premier temps, le décalage angulaire ($\theta$1) du dispositif détecteur (20) du bras de support (10) et dans un second temps, la longueur (L1) du bras de support (10).

Dans une configuration géométrique donnée et pour chaque position prise par l'extrémité du godet (12) dans cette configuration géométrique donnée, le capteur de position angulaire embarqué dans chaque dispositif détecteur (20, 21, 22) fournit les données de positions angulaires ($\beta_i$), représentant l'angle formé par l'axe de symétrie ($\Delta$1, $\Delta$2, $\Delta$3) de chaque dispositif détecteur (20, 21, 22) et la verticale, à une unité de traitement prévue dans chaque dispositif détecteur (20, 21, 22). Le module de communication sans fil de chaque dispositif détecteur (20, 21, 22) transfère (étape 1002, figure 1) aussitôt ces données de positions angulaires ($\beta_i$) vers le système de calibration (13) de l'engin d'excavation (1), via l'émetteur à interface sans fil de chaque dispositif détecteur (20, 21, 22) connecté respectivement à l'unité de traitement de chaque dispositif détecteur (20, 21, 22). Ces données de positions angulaires ($\beta_i$) sont envoyées à distance dans un signal d'émission (Sg), de préférence radio.

Le système de calibration (13) de l'engin d'excavation (1) recueille à distance et sans câble les données de positions angulaires issues des différents dispositifs détecteurs (20, 21, 22) et associées à chaque position de référence via le récepteur de communication sans fil (130) qui est relié à la mémoire (133) du système de calibration (13) de l'engin d'excavation (1).

Ces données de position angulaire ($\beta_i$) associées à chaque point de référence, c'est-à-dire à chaque position prise par l'extrémité du godet (12), sont ensuite mémorisées dans la mémoire (133) du système de calibration (13) de l'engin (1).

Dans un mode de réalisation préféré, à chaque fois que l'opérateur positionne, au moyen des manettes (131c) et à l'oeit nu, l'extrémité de l'outil de travail (12) sur un point de référence, l'opérateur déclenche la mesure, puis l'envoi et la mémorisation, décrites précédemment, des données de position angulaire fournies par les dispositifs détecteurs (20, 21, 22) par l'appui sur un bouton de validation (non représenté) prévu sur l'interface utilisateur (131) du système de calibration (13) de l'engin (1).

Dans une variante de réalisation, dans le cas où les plans ou lignes de référence des configurations géométriques définies sont réalisés par des dispositifs lasers, un détecteur laser (non représenté) peut être disposé à l'extrémité de l'outil de travail (12) pour déterminer le moment où l'extrémité de l'outil de travail (12) est positionnée sur un point de référence d'un plan ou ligne laser de référence et ainsi déclencher automatiquement la mesure puis l'envoi et la mémorisation, décrites précédemment, des données de position angulaire ($\beta_i$) angulaires fournies par les dispositifs détecteurs (20, 21, 22). Pour effectuer le déclenchement automatique, le détecteur laser est équipé d'un module de communication sans fil pour envoyer un ou des signaux de déclenchement de mesure des données de position angulaire à destination des dispositifs détecteurs (20 21 22). Le détecteur laser peut être autonome de la même façon que les dispositifs détecteurs (20, 21, 22) de positions angulaires et communiquer par onde radio.

Dans une configuration géométrique donnée et pour chaque position prise par l'extrémité du godet (12) dans cette configuration géométrique donnée, les données de positions angulaires ($\beta_i$), associées à chaque point de référence et mémorisées dans la mémoire (133) du système de calibration (13) sont ensuite transmises (étapes 1002, figure 1) au module de calcul (132) du système de calibration (13).

Ce module de calcul (132) est apte, via un programme approprié de résolution d'équations mathématiques, au moyen des données d'entrées connues saisies par l'opérateur et mémorisées (étape 1012, figure 1) dans la mémoire (133) du système de calibration (13) pour une configuration géométrique donnée associées aux données de positions angulaires ($\beta_i$) mesurées et reçues (étape 1002, figure 1) pour chaque position de l'extrémité du godet (12) pour cette configuration géométrique donnée à calculer et déterminer (étape 1003, figure 1) les paramètres inconnus ($L_i$ et $\theta_i$).

De manière non limitative, différentes méthodes ou programmes de résolution d'équations mathématiques du module de calcul (132) du système de calibration (13) de l'engin d'excavation (1) peuvent être envisagées pour déterminer et calculer (étape 1003, figure 1) les paramètres inconnus ($L_i$ et $\theta_i$). Les équations mathématiques sont issues des relations mathématiques, décrites précédemment, définissant les données représentatives de la position verticale (h) et de la position horizontale (H) de l'outil de travail (12) en fonction des paramètres inconnus.

La résolution du système d'équations mathématiques est effectuée par le programme exécuté par le module de calcul (132) du système de calibration (1) résolvant un système matriciel (SM) contenant pour la configuration géométrique donnée et pour chaque position de ladite configuration géométrique prise par l'extrémité de l'outil de travail (12), les données de positions angulaires ($\beta_i$) de chaque organe articulé (10, 11, 12) de l'engin (1) et les données d'entrées connues relatives à cette configuration géométrique ou utilisant une ou plusieurs méthodes mathématiques appropriées.

Nous allons, à présent, décrire des exemples de méthodes de résolutions mathématiques. De manière non limitative, d'autres méthodes de résolutions mathématiques peuvent être envisagées.

Une ou des méthode(s) de calcul utilise(nt) l'équation non-linéaire (F2) et l'équation non-linéaire (F2') équivalente, c'est-à-dire l'équation non-linéaire (F2') associée à la profondeur horizontale (H) de l'outil de travail de type godet (12) pour déterminer les paramètres inconnus ($L_i$ et $\theta_i$). Dans ce cas, cela amène à un problème d'estimation de paramètres non linéaires qui peut être résolu en utilisant des algorithmes d'optimisation non linéaires ou des dispositifs de résolution non linéaires par la méthode des moindres carrés. Les méthodes d'optimisation non-linéaires appropriées correspondent à, par exemple et de manière non-limitative, des méthodes Newtoniennes ou quasi-Newtoniennes ou une méthode de Trust-Region ou encore une méthode de Nelder-Mead. Les dispositifs de résolution non-linéaires par la méthode des moindres carrés sont, par exemple et de manière non limitative, une méthode de Gauss-Newton ou une méthode de Levenberg-Marquardt.

D'autres méthodes de calcul utilisent le système d'équation (F3, F3') défini précédemment. Dans ce cas, on aboutit à un système d'équations linéaires qui permet de déterminer aisément et rapidement les paramètres inconnus ($L_i$ et $\theta_i$). Dans ces méthodes, la détermination des paramètres inconnus ($L_i$ et $\theta_i$) passe par la détermination des nouveaux paramètres inconnus à savoir $a_i$ et $b_i$.

Dans ce qui suit et de manière non limitative, nous allons à présent décrire une première méthode mathématique associée à la configuration géométrique des points de référence du mode de réalisation préféré, décrit précédemment. Cette première méthode utilise le système d'équation linéaire (F3, F3').

Lorsque l'extrémité de l'outil de travail de type godet (12) est positionnée sur le premier point de référence (M1) du premier plan ou ligne laser de référence (P) horizontal(e), chaque dispositif détecteur (20, 21, 22) fournit au module de calcul (132) du système de calibration (13) de l'engin d'excavation (1) les données de positions angulaires relatives aux organes articulés (10, 11, 12) sur lesquels ils sont positionnés. Les données de positions angulaires relatives aux organes articulés (10, 11, 12) sont mémorisées pour la position associée dans la mémoire (133) du système de calibration (13) de l'engin d'excavation (1). Les mêmes opérations sont réalisées pour les autres points de référence (M2, M3,..., Mi) du premier plan ou ligne laser de référence (P) puis pour les points de référence (M'1, M'2, M'3,..., M'i) du deuxième plan ou ligne laser de référence (P') horizontal(e) et parallèle au premier plan ou ligne laser de référence (P).

De cette façon, la mémoire (133) du système de calibration (13) de l'engin d'excavation (1) comporte :

- un premier ensemble ($\overline{\beta}^{(1)}$) de données de positions angulaires fournies par les dispositifs détecteurs (20, 21, 22) pour chaque position de l'extrémité du godet (12) sur le premier plan ou ligne laser de référence (P) tel que

$$\overline{\beta}^{(1)} = \left\{ \overline{\beta}^{(1,1)},..., \overline{\beta}^{(1,N_1)} \right\}$$

où $N_1$ est le nombre de positions prises par l'extrémité du godet (12) sur le premier plan ou ligne laser de référence (P) (soit le nombre de points de référence sur le premier plan laser de référence (P)) et $\overline{\beta}^{(1,k)}$ est le vecteur des angles détectés par les dispositifs détecteurs (20, 21, 22) pour les $k^{ième}$ positions de l'extrémité du godet (12) sur le premier plan ou ligne de référence (P) ; et

- un deuxième ensemble ($\overline{\beta}^{(2)}$) de données de positions angulaires fournies par les dispositifs détecteurs (20, 21, 22) pour chaque position de l'extrémité du godet (12) sur le deuxième plan ou ligne laser de référence (P') tel que

$$\overline{\beta}^{(2)} = \left\{ \overline{\beta}^{(2,1)},..., \overline{\beta}^{(2,N_2)} \right\}$$

où $N_2$ est le nombre de positions prises par l'extrémité du godet (12) sur le deuxième plan ou ligne laser de référence (P') et $\overline{\beta}^{(2,k)}$ est le vecteur des angles détectés par les dispositifs détecteurs (20, 21, 22) pour les $k^{iène}$ positions de l'extrémité du godet (12) sur le deuxième plan ou ligne de référence (P').

Il est à noter que si le deuxième plan ou ligne de référence (P') est plus haut que le premier plan de référence (P), la distance (DPP') séparant ces deux plans ou lignes de référence (P, P') est positive et si le deuxième plan de référence (P') est plus bas que le premier plan de référence (P), la distance (DPP') séparant ces deux plans ou lignes de référence (P, P') est négative. Par ailleurs, pour obtenir des résultats de calibration avec une grande précision, la distance (DPP') entre les deux plans ou lignes de référence (P, P') doit être la plus grande possible.

A partir du premier ensemble ($\overline{\beta}^{(1)}$) de données de positions angulaires et en utilisant l'équation linéaire (F3), on obtient le système d'équations (Fa1) suivant, en prenant en considération que l'extrémité de l'outil de travail de type godet (12) est toujours disposée sur la même hauteur (ho) qui est inconnue :

$$\sum_{i=1}^{n} ai.\sin(\beta_i^{(1,1)}) + bi.\cos(\beta_i^{(1,1)}) - ho = 0$$
$$\vdots \qquad\qquad\qquad\qquad\qquad\qquad\qquad \text{(Fa1)}$$
$$\sum_{i=1}^{n} ai.\sin(\beta_i^{(1,N_1)}) + bi.\cos(\beta_i^{(1,N_1)}) - ho = 0$$

A partir du deuxième ensemble ($\overline{\beta}^{(2)}$) de données de positions angulaires et en utilisant l'équation linéaire (F3), on obtient le système d'équations (Fa2) suivant, en prenant en considération que l'extrémité de l'outil de travail de type godet (12) est disposée sur la hauteur (ho+ DPP') qui est égale à la somme de la hauteur (ho) du premier plan ou ligne de référence (P) et de la distance (DPP') connue séparant les deux plans ou ligne de référence (P, P') :

$$\sum_{i=1}^{n} ai.\sin(\beta_i^{(2,1)}) + bi.\cos(\beta_i^{(2,1)}) - ho = DPP'$$

$$\vdots \qquad\qquad\qquad\qquad\qquad\qquad\text{(Fa2)}$$

$$\sum_{i=1}^{n} ai.\sin(\beta_i^{(2,N_2)}) + bi.\cos(\beta_i^{(2,N_2)}) - ho = DPP'$$

L'écriture du système d'équation complet (Fa1, Fa2) est reformulée de telle sorte qu'on obtienne un système matriciel (SM) tel que $A.x = c$ avec $x = (a_1, b_1,...,a_n, b_n, h_0)^T$, la ligne N1 de A ayant le forme suivante $(\sin(\beta_1^{(1,k)}), \cos(\beta_1^{(1,k)}),..., \sin(\beta_n^{(1,k)}), \cos(\beta_n^{(1,k)}),-1)$, la ligne N2 de A ayant la forme suivante $(\sin(\beta_1^{(2,k)}),\cos(\beta_1^{(2,k)}),...,\sin(\beta_n^{(2,k)}),\cos(\beta_n^{(2,k)}),-1)$, et le vecteur c consistant au N1 fois 0 suivi par le N2 fois (DPP').

Dans ce qui suit et de manière non limitative, nous allons à présent décrire une deuxième méthode mathématique associée à la configuration géométrique des points de référence de la première variante de réalisation, décrite précédemment. Cette deuxième méthode utilise également le système d'équation linéaire (F3, F3').

Lorsque l'extrémité de l'outil de travail de type godet (12) est positionnée sur le premier point de référence (O1) de la première ligne laser de référence (O) verticale, chaque dispositif détecteur (20, 21, 22) fournit au module de calcul (132) du système de calibration (13) de l'engin d'excavation (1) les données de positions angulaires relatives aux organes articulés (10, 11, 12) sur lesquels ils sont positionnés. Les données de positions angulaires relatives aux organes articulés (10, 11, 12) sont mémorisées pour la position associée dans la mémoire (133) du système de calibration (13) de l'engin d'excavation (1). Les mêmes opérations sont réalisées pour les autres points de référence (02, 03) de la première ligne laser de référence (O) puis pour les points de référence (O'1, O'2, O'3) de la deuxième ligne laser de référence (O') verticale et parallèle à la première ligne laser de référence (O) ainsi que pour les autres points de référence disposés selon d'autres lignes de référence $(O_K)$ verticales et parallèles à la première ligne de référence (O).

De cette façon, la mémoire (133) du système de calibration (13) de l'engin d'excavation (1) comporte un ensemble $(\bar{\beta})$ de données de positions angulaires fournies par les dispositifs détecteurs (20, 21, 22) pour chaque position de l'extrémité du godet (12) sur les points de référence de chaque ligne de référence formée par la tige tel que :

$$\bar{\beta} = \left\{ \bar{\beta}^{(1,1)}, \bar{\beta}^{(2,1)}, \bar{\beta}^{(3,1)},..., \bar{\beta}^{(1,N)}, \bar{\beta}^{(2,N)}, \bar{\beta}^{(3,N)} \right\}$$

où N est le nombre de lignes de référence formés par le déplacement de la tige et $\bar{\beta}^{(i,k)}$ est le vecteur des angles détectés par les dispositifs détecteurs (20, 21, 22) pour la position de l'extrémité du godet (12) au point de référence i sur la $k^{iéme}$ ligne de référence. On prend i=1 pour le point de référence le plus bas sur la tige, i=2 pour le point de référence du milieu sur la tige et i=3 pour le point de référence le plus haut sur la tige. La distance connue entre la ligne de référence k et k+1 avec k=1,..., N-1 est notée $d_k$ et le déplacement vertical connu pour la ligne de référence k avec k=2,..., N par rapport à la première position de la tige, c'est-à-dire de la première ligne de référence (O), est noté $h_{k-1}$

Il est à noter que pour obtenir des résultats de calibration avec une grande précision, la distance connue $(d_k)$ entre deux lignes de référence doit être la plus importante possible.

Pour le premier point de référence (O1) de la première ligne de référence (O), l'extrémité du godet (12) est placée à une hauteur (ho) inconnue sur le point de référence le plus bas. Le point de référence (O2) du milieu est disposé à une hauteur (ho+DO1O2) égale à la somme de la hauteur (ho) inconnue avec la distance (DO1O2) connue séparant le point de référence (O1) du bas et le point de référence adjacent (02) du milieu. Le point de référence (O3) du haut est disposé à une hauteur (ho+DO2DO3) connue séparant le point de référence (02) du milieu et le point de référence adjacent (O3) du haut. En utilisant les vecteurs associés à chaque point de référence (O1 O2, O3) pour le premier plan de référence (O) et à partir de l'équation linéaire (F3), on obtient les trois équations suivantes :

$$\sum_{i=1}^{n} ai.\sin(\beta_i^{(1,1)}) + bi.\cos(\beta_i^{(1,1)}) - ho = 0 \qquad\qquad \text{(Fb1)}$$

$$\sum_{i=1}^{n} ai.\sin(\beta_i^{(2,1)}) + bi.\cos(\beta_i^{(2,1)}) - ho = DO1O2 \qquad \text{(Fb2)}$$

$$\sum_{i=1}^{n} ai.\sin(\beta_i^{(3,1)}) + bi.\cos(\beta_i^{(3,1)}) - ho = DO2O3 \qquad \text{(Fb3)}$$

En outre, l'équation linéaire (F3') décrite précédemment, peut être reformulée de façon à ce qu'on obtienne les équations suivantes :

$$(\sum_{i=1}^{n} ai.\cos(\beta_i^{(2,1)}) - bi.\sin(\beta_i^{(2,1)})) - (\sum_{i=1}^{n} ai.\cos(\beta_i^{(1,1)}) - bi.\sin(\beta_i^{(1,1)})) = 0 \quad \text{(Fb4)}$$

$$(\sum_{i=1}^{n} ai.\cos(\beta_i^{(3,1)}) - bi.\sin(\beta_i^{(3,1)})) - (\sum_{i=1}^{n} ai.\cos(\beta_i^{(1,1)}) - bi.\sin(\beta_i^{(1,1)})) = 0 \quad \text{(Fb5)}$$

Pour chacune des trois positions de référence de chaque ligne de référence, les équations sont équivalentes à celle exprimées ci-dessus pour les trois points de référence (O1, O2, O3) de la première ligne de référence (O). La différence est que le point de référence du bas pour la ligne de référence k avec k=2,..., N est déplacé verticalement de $h_{k-1}$ par rapport à ho.

Les équations suivantes sont obtenues pour k=2,..., N formant un total de 5(N-1) équations supplémentaires :

$$\sum_{i=1}^{n} ai.\sin(\beta_i^{(1,k)}) + bi.\cos(\beta_i^{(1,k)}) - ho = h_{k-1} \qquad \text{(Fb6)}$$

$$\sum_{i=1}^{n} ai.\sin(\beta_i^{(2,k)}) + bi.\cos(\beta_i^{(2,k)}) - ho = h_{k-1} + DO1O2 \qquad \text{(Fb7)}$$

$$\sum_{i=1}^{n} ai.\sin(\beta_i^{(3,k)}) + bi.\cos(\beta_i^{(3,k)}) - ho = h_{k-1} + DO2O3 \qquad \text{(Fb8)}$$

$$(\sum_{i=1}^{n} ai.\cos(\beta_i^{(2,k)}) - bi.\sin(\beta_i^{(2,k)})) - (\sum_{i=1}^{n} ai.\cos(\beta_i^{(1,k)}) - bi.\sin(\beta_i^{(1,k)})) = 0 \quad \text{(Fb9)}$$

$$(\sum_{i=1}^{n} ai.\cos(\beta_i^{(3,k)}) - bi.\sin(\beta_i^{(3,k)})) - (\sum_{i=1}^{n} ai.\cos(\beta_i^{(1,k)}) - bi.\sin(\beta_i^{(1,k)})) = 0 \quad \text{(Fb10)}$$

Le système de calibration (13) a également mémorisé les informations relatives aux distances séparant chaque ligne de référence ($O_k$) ce qui permet de bénéficier de N-1 équations additionnelles. Dans le but de formuler ces équations, il est nécessaire de calculer les distances horizontales $\tilde{d}_k$ des positions de la tige à partir des distances mesurées $d_k$ séparant deux lignes de référence adjacentes pour k=1,..., N-1. On obtient ainsi, l'équation suivante :

$$\tilde{d}_k = \sqrt{d_k^2 - (h_k - h_{k-1})^2}, k = 1,..., N-1 \quad \text{(Fb11)}$$

où nous posons ho=0.

Et en utilisant l'équation linéaire (F3'), on obtient l'équation suivante (Fb12) :

$$(\sum_{i=1}^{n} ai.\cos(\beta_i^{(1,k+1)}) - bi.\sin(\beta_i^{(1,k+1)})) - (\sum_{i=1}^{n} ai.\cos(\beta_i^{(1,k)}) - bi.\sin(\beta_i^{(1,k)})) = \tilde{d}_k$$

$$k = 1,..., N-1$$

En regroupant toutes les équations (Fb1) à (Fb12) décrites précédemment, on obtient un système linéaire d'équations d'inconnus x = ($a_1$, $b_1$, ..., $a_n$, $b_n$, ho) qui peut s'écrire sous forme matricielle.

Nous obtenons ainsi, comme pour la première méthode mathématique, décrite précédemment, un système matriciel (SM) d'équations linéaires M tel que $A.x = c$, où soit M = $N_1$+$N_2$ (première méthode décrite précédemment) soit M = 6N-1 (deuxième méthode). En résolvant ce système matriciel (SM), le module de calcul (132) du système de calibration (13) de l'engin d'excavation (1) est apte à déterminer les paramètres $a_i$ et $b_i$ qui étaient jusqu'alors inconnus pour chaque organe articulé (10, 11, 12) de l'engin d'excavation (1).

Ayant déterminé $a_i$ et $b_i$, i = 1,..., n, dans notre exemple de réalisation, les paramètres (a1, b1) associés au bras de support (10), les paramètres (a2, b2) associés au bras de godet (11) et les paramètres (a3, b3) associées au godet (12), via le système matriciel (SM), les paramètres de longueurs ($L_i$) et de décalages angulaires ($\theta_i$) de chaque organe articulé (10, 11, 12) de l'engin d'excavation (1) nécessaires pour la commande de la profondeur verticale (D) ou horizontale (H) du godet (12) en utilisant l'équation (1) sont donnés ensuite par les formules suivantes (Fc1, Fc2) :

$$L_i = \sqrt{a_i^2 + b_i^2} \quad \text{(Fc1)}$$

et

$$\theta_i = -\arctan\left(\frac{b_i}{a_i}\right) \quad \text{(Fc2)}$$

Il est à noter que le système matriciel (SM) doit être résolu pour les 2n+1 inconnus du second membre (x) du système matriciel (SM). Au préalable, le nombre d'équations (M) du système matriciel (SM) ne doit pas être inférieur aux nombres d'inconnus 2n+1 avec n égale au nombre d'organes articulés de l'engin d'excavation (1). Dans notre exemple de réalisation, le bras de support (10), le bras de godet (11) et le godet (12) sont articulés et disposent chacun d'un dispositif détecteur (20, 21, 22) soit n=3 ce qui fait 7 paramètres inconnus: les 3 longueurs (L1, L2, L3) et les 3 décalages angulaire (θ1, θ2, θ3) de chacun des organes articulés (10, 11, 12) à déterminer et la hauteur (ho) du premier plan de référence de la configuration géométrique donnée.

Si le nombre d'équations (M) du système matriciel (SM) est inférieur aux nombres d'inconnus 2n+1, il n'est pas possible d'avoir une solution unique pour chaque paramètre à déterminer.

En outre, avec exactement 2n+1 équations, la solution du système matriciel (SM), c'est-à-dire les paramètres déterminés, n'est pas précise puisque les données de positions angulaires mesurées peuvent contenir des erreurs de mesures.

En effet, sous des conditions normales de fonctionnement de l'engin d'excavation (1), des erreurs de mesures peuvent apparaître. Par exemple, les déplacements de l'extrémité des organes articulés (10, 11, 12) de l'engin d'excavation (1) sur les points de référence sont réalisés à l'oeil nu par un opérateur et, par conséquent, ne sont pas tous précis ce qui induit une variation des données de positions angulaires ($\beta_i$) fournies par les dispositifs détecteurs (20, 21, 22).

Si certaines données mesurées sont inexactes, cela introduit une erreur importante dans le procédé de calibration, et notamment sur les valeurs des paramètres à déterminer.

Le module de calcul (132) du système de calibration (13) de l'engin d'excavation (1) peut prendre en considération ces erreurs de mesures.

Le procédé de calibration peut comporter ainsi une étape de détermination et d'élimination (1004) des données d'entrées et de positions angulaires ($\beta_i$) erronées qui sont réalisées par un programme exécuté par le module de calcul (132) du système de calibration (1) en utilisant une ou plusieurs méthodes mathématiques appropriées, les données d'entrées et de positions angulaires ($\beta_i$) erronées étant éliminées de l'ensemble des données nécessaires pour le calcul des paramètres inconnus ($L_i$, $\theta_i$).

Nous allons, à présent, décrire des exemples de résolution mathématiques pour déterminer et éliminer les erreurs de mesures. De manière non limitative, d'autres méthodes de résolution mathématiques peuvent être envisagées.

D'une part, le module de calcul (132) est apte à déterminer l'influence des erreurs de mesures.

Pour déterminer l'influence des erreurs de mesures, il est nécessaire de fournir assez de données mesurées pour obtenir plus de 2n+1 équations.

Pour le système matriciel (SM), une solution approximative peut être trouvée de façon à ce qu'un paramètre du vecteur (x) du système matriciel (SM) minimise la différence entre le premier membre (A.x) et le deuxième membre (c) de l'égalité du système matriciel (SM).

Généralement, on considère la minimisation par rapport aux fonctions de la forme $\sum_{k=1}^{M} \left| c_k - \left( \sum_{j=1}^{2n+1} A_{k,j}.x_j \right) \right|^{\mu}$,

$\mu \in$ N ou selon une autre forme $\sum_{k=1}^{M} w_k \left| c_k - \left( \sum_{j=1}^{2n+1} A_{k,j}.x_j \right) \right|^{\mu}$ $W_k$ sont des coefficients pondéraux ajustés de façon algorithmique ou imposée.

Pour le système matriciel (SM), la méthode la plus appropriée est de le résoudre selon la méthode des moindres carrés qui consiste à trouver la valeur de x de telle sorte que la somme résiduelle des carrés (rss) soit minimale avec

$$rss = \sum_{k=1}^{M} (c_k - (\sum_{j=1}^{2n+1} A_{k,j}.x_j))^2 \ .$$

Pour trouver une solution à ce problème de minimisation, les méthodes de résolution appropriées sont également des méthodes Newtoniennes ou quasi-Newtoniennes ou encore des méthodes de gradient-conjugué. A cause de la structure de l'équation de la somme résiduelle (rss), l'utilisation de la méthode Newtonienne serait, dans ce cas, équivalente à la résolution de l'équation normale $A^T A.x = A^T .c$. Puisque l'équation normale est un système d'équations linéaires, il pourrait en principe être résolu avec une élimination connue sous le nom de Gaussienne ou en utilisant une factorisation connue sous le nom de Cholesky.

D'autre part, le module de calcul (132) est apte à détecter et éliminer les données erronées (étape 1004, figure 1) de l'ensemble des données nécessaires pour le calcul des paramètres inconnus ($L_i$, $\theta_i$).

Pour détecter les données erronées induisant des erreurs dans la calibration, le module de calcul (132) utilise le modèle (Fe1) suivant en utilisant le système matriciel (SM) défini précédemment :

$$A.\hat{x} + \varepsilon = c \qquad\qquad\qquad \text{(Fe1)}$$

où $\hat{x}$ représente les vraies valeurs non détériorées mais inconnues des paramètres ho, $a_i$ et $b_i$, i = 1,..., n, et $\varepsilon$ représente le vecteur additionnel d'erreurs.

Or, le vecteur additionnel d'erreurs ($\varepsilon$) est inconnu et ne peut pas être calculé. Pour résoudre ce problème, une estimation doit être utilisée par le module de calcul (132) du système de calibration (13). De façon plus précise, le module de calcul (132) effectue une estimation du ratio de $\varepsilon_k, k \in \{1,...,M\}$ et de la variance des autres erreurs $\varepsilon_j, j \neq k$.

La technique d'erreur résiduelle externe connue sous le nom de Student permet une telle estimation de façon à ce que, pour les $k^{\text{ième}}$ positions fournissant des données mesurées, on obtienne l'équation (Fe2) définie par

$$t_k = \frac{e_k}{\sigma_k \sqrt{1 - v_{kk}}} \quad \text{où } e_k, V_{kk} \text{ et } \sigma_k \text{ sont définis comme suit :}$$

- $$e_k = c_k - \sum_{j=1}^{2n+1} A_{k,j}.x_j \quad, \text{ c'est-à-dire que } e_k \text{ est l'erreur résiduelle de la } k^{\text{ième}} \text{ équation dans le système matriciel}$$

  (SM) pour la solution x du système matriciel (SM) ;

- $V_{kk}$ est le $k^{\text{ième}}$ élément diagonal de la matrice $V = (v_{ij}) = A(A^T A)^{-1} A^T$; et

- $$\sigma^2_{(k)} = \frac{rss - \dfrac{e_k^2}{1 - v_{kk}}}{\hat{M}} \quad \text{où } \hat{M} \text{ est au moins le nombre d'équations moins le nombre d'inconnus du système}$$

  matriciel (SM), c'est-à-dire $\hat{M} = M - (2n+1)-1$.

En se basant sur la technique de l'erreur résiduelle externe de Student ($t_k$), seulement une donnée erronée peut être détectée à chaque fois. Pour trouver toutes les données erronées, une procédure itérative est prévue. Cette procédure comprend une étape d'initialisation qui consiste à résoudre le système matriciel (SM) A.x = c, où A et c comporte toutes les positions prises par les organes articulés (10, 11,12) de l'engin d'excavation (1) pour fournir les données d'entrées.

Ensuite, une étape d'itération est prévue. Cette étape d'itération consiste à calculer le maximum ($t_m$) des valeurs absolues de toutes les erreurs résiduelles externes de Student résultant du système matriciel (SM) résolu à l'étape d'initialisation (encore appelée étape K-1), avec $t_m = \max_k |t_k|$.

Si le maximum ($t_m$) des valeurs absolues est plus petit qu'un seuil donné ($\tau$), l'étape d'itération est arrêtée. Les données d'entrées comportent des données erronées détectables de toute façon et le second membre (x) de l'égalité du système matriciel (SM) contient la solution du système matriciel (SM).

Sinon, l'étape d'itération consiste à trouver la position fournissant des données erronées qui correspond à l'indice k fournissant la valeur maximale ($t_m$) puis à résoudre, à nouveau, le système matriciel (SM) A.x = c, mais en incluant seulement les données restantes pour construire A et c.

Ensuite, on répète l'étape d'initialisation et l'étape d'itération de la procédure itérative pour l'indice k+1, cette étape étant appelée étape d'avancement.

Bien que cette procédure s'arrête après un nombre fini d'itérations, il est utile de la limiter seulement à quelques itérations, par exemple et de manière non limitative, 5 à 10 itérations. S'il y a un plus grand nombre de données erronées que d'itérations, la variation moyenne résultante des erreurs ($\varepsilon_k$) sera très importante et la détection fiable des erreurs ne sera pas possible de toute façon.

Pour le seuil ($\tau$) qui a été utilisé par la procédure itérative, une valeur utilisable est, par exemple et de manière non limitative, $\tau=3$. La technique des erreurs résiduels externes connue sous le nom de Student ($t_k$), dans cette limite, représente plus de 99% de cas possibles si M>20. Les valeurs plus élevées pour $t_k$ peuvent être vues comme des cas exceptionnels à exclure du procédé de calibration selon l'invention.

Il est à noter que les erreurs résiduels observés $(A.x)_k - c_k$ peuvent donner une indication possible pour détecter les données erronées. Cependant, elles ne sont pas indépendantes et n'ont pas de variance commune. La détermination de seuils adéquats avec l'aide d'opérateur ou de façon algorithmique en se basant sur la moyenne ou une analyse par la théorie des grappes ou des techniques similaires sont peu fiables.

Les variances hétérogènes dans les erreurs résiduelles observées sont facilement corrigées par la standardisation de chaque erreur résiduelle. La technique des erreurs résiduelles externes de Student sont une des méthodes possibles pour corriger les variances. La technique des erreurs résiduelles standardisées, quelques fois appelées technique des erreurs résiduelles internes de Student, est aussi utilisée. Pour les données non erronées, ces erreurs résiduelles transformées se comportent soit de façon similaire à une variable aléatoire de Student soit exactement comme une distribution de Student. Cela tient compte du test de détection des données erronées avec un seuil commun prédéfini basé sur la distribution de Student ou un seuil qui est ajusté de façon supplémentaire en utilisant la méthode de Bonferroni.

De manière non limitative, d'autres techniques d'erreurs résiduelles utilisables pour la détection des données erronées sont, par exemple et de manière non limitative, des techniques d'erreurs résiduelles récursives. Pour la détection simultanée de données erronées multiples, des versions analogues de la technique des erreurs résiduelles internes ou externes de Student existent.

Enfin, le module de calcul (132) est apte à analyser les erreurs de mesures.

Si les données mesurées contiennent des erreurs, la solution du système matriciel (SM) sera seulement une approximation des valeurs des longueurs ($L_i$) et des positions angulaires ($\theta_i$) réelles. La précision atteinte n'est pas influencée par la variance des données d'entrées mais seulement par le nombre de mesures et, en particulier, par l'ensemble des angles obtenus à partir des différentes mesures prises par les dispositifs détecteurs (10, 11, 12). Pour estimer la qualité du procédé de calibration, un test d'une quantité prenant en compte les données d'entrées et le résultat du procédé de calibration peut être effectué.

En donnant un ensemble particulier d'angles mesurés et de la distance mesurée des plans ou lignes lasers de référence (mode de réalisation préféré) ou des distances et des déplacements verticaux entre chaque plan de référence formé par une tige (première variante de réalisation), la solution correspondante $y=(l_1,...,l_n,\theta_1,....,\theta_n)^T$ du système matriciel (SM) peut être écrit sous une forme fonctionnelle (Fe3) telle que y = y(z) où z est le vecteur contenant tous les paramètres déterminés.

En remplaçant, de manière formelle, les valeurs des paramètres mesurées dans z par la somme des valeurs des paramètres réels (mais inconnues) et l'erreur de mesure, c'est-à-dire $z = \hat{z} + \delta$ et aussi en utilisant une approximation du premier ordre de la formule ci-dessus $z = \hat{z} + \delta$, l'équation (Fe3) devient l'équation (Fe4) suivante $y = y(\hat{z} + \delta) = y(\hat{z}) + Dy(z).\delta$

La différence $\Delta = y - y(\hat{z})$ entre la solution calculée (y) et les valeurs des paramètres réels peut être approximée par le produit de la dérivée $Dy(\hat{z})$ et le vecteur des erreurs de mesure ($\delta$)

En supposant une distribution normale des erreurs ($\delta$) dans les données d'entrées avec une variance donnée ($\sigma_k$) pour l'erreur de mesure $\delta_k$, une approximation de la variance ($\rho_i$) de l'erreur ($\Delta_i$) du $i^{ième}$ paramètre de la solution du système matriciel (SM) est ensuite donnée par :

$$\rho_i = \sqrt{\sum_{k=1}^{m}((Dy(\hat{z}))_{i,k}.\sigma_k)^2}$$

où m est le nombre de valeurs d'entrées individuelles, m = n (N1+N2)+1 pour la première méthode associée au mode de réalisation préféré et m = n.3.N + 2(N - 1) pour la deuxième méthode associée à la première variante de réalisation.

Puisque la valeur $\hat{z}$ n'est pas connue, elle ne peut pas être calculée directement. Mais, il est certain de supposer que la dérivée $Dy(z)$ pour les valeurs mesurées (z) est assez proche de la dérivée $Dy(\hat{z})$ de sorte qu'elle puisse être utilisée à la place de la dérivée $Dy(z)$ pour obtenir une estimation appropriée sur la variation possible de la solution du système matriciel (SM) à partir des valeurs des paramètres réels. Cette dérivée $Dy(z)$ peut être calculée facilement en utilisant le théorème des fonctions implicites appliqué du fait que la solution (y) du système matriciel (SM) est calculée à partir de la solution x du problème de minimisation par la technique des moindres carrées. Les valeurs de la variance $\rho_i$ $i =1,...,2n$ calculée pour la donnée spécifique d'un procédé de calibration fournissent ensuite l'ensemble possible des erreurs dans les paramètres calibrés.

Il est à noter que si l'engin d'excavation (1) est toujours calibré mais qu'un ou plusieurs organes (10, 11, 12) de l'engin d'excavation (1) sont modifiés par l'opérateur, par exemple, un godet différent (12) est monté ou un dispositif détecteur (20, 21, 22) défectueux est remplacé, seulement les paramètres du ou des organe(s) ou dispositif(s) changé (s) devront être à nouveau calibrés. Le procédé de recalibration est le même que pour le procédé de calibration entier de l'engin d'excavation (1), décrit précédemment mais les paramètres inchangés, représentés sur l'écran (131a) du système de calibration (13), des autres dispositifs détecteurs (20, 21, 22) ou organes articulés (10, 11, 12) de l'engin d'excavation (1) peuvent être précisés par l'opérateur comme des constantes connues à la place de paramètres inconnus dans le système matriciel (SM). Puisque les longueurs $(L_i)$ et les décalages angulaires $(\theta_i)$ ne sont pas utilisés directement dans le système matriciel (SM) mais que ceux sont les nouveaux paramètres $(a_i$ et $b_i)$ associés, dans certains cas, des étapes supplémentaires doivent être exécutées pour résoudre le système matriciel (SM) et calculer les nouvelles longueurs $(L_i)$ et les nouveaux décalages angulaires $(\theta_i)$ associés à ou aux organe(s) articulé(s) de l'engin d'excavation (1) et/ou à ou aux dispositif(s) détecteur(s) déplacés ou changés.

Nous allons, à présent décrire, des exemples de résolution mathématiques dans le cas où un ou plusieurs organes (10, 11, 12) de l'engin (1) sont modifiés par l'opérateur. De manière non limitative, d'autres méthodes mathématiques de résolution dans le cas où un ou plusieurs organes (10, 11, 12) de l'engin (1) sont modifiés par l'opérateur peuvent être envisagées.

Si pour un organe articulé particulier de l'engin d'excavation (1), c'est-à-dire pour un i particulier appartenant à l'ensemble {1,..., N}, les longueurs $(L_i)$ et les décalages angulaires $(\theta_i)$ sont fournis comme des valeurs constantes, aucun traitement particulier n'est nécessaire. Les valeurs constantes suivantes

$$a_i . \sin(\beta_i^{(j,k)}) = l_i . \cos(\theta_i) . \sin(\beta_i^{(j,k)})$$

$$b_i . \cos(\beta_i^{(j,k)}) = -l_i . \sin(\theta_i) . \cos(\beta_i^{(j,k)})$$

et dans le cas de la deuxième méthode mathématique associée à la première variante de réalisation, également les valeurs constantes suivantes

$$a_i . \cos(\beta_i^{(j,k)}) = l_i . \cos(\theta_i) . \cos(\beta_i^{(j,k)})$$

$$- b_i . \sin(\beta_i^{(j,k)}) = l_i . \sin(\theta_i) . \sin(\beta_i^{(j,k)})$$

pour tout les (j, k), doivent être calculées et soustraites des deux cotés des équations du système matriciel (SM). La résolution du système matriciel (SM), l'élimination des données d'entrées erronées et l'estimation des erreurs de mesures se fera de manière analogue au procédé de calibration entier pour l'engin d'excavation (1).

Si pour un organe articulé particulier de l'engin d'excavation (1), c'est-à-dire pour un i particulier, seulement le décalage angulaire $(\theta_i)$ est inchangé et la longueur $(L_i)$ est inconnue, la situation change légèrement. Dans ce cas, le terme mathématique (Fr1) suivant $l_i \cos(\theta_i).\sin(\beta_i) - l_i \sin(\theta_i). \cos(\beta_i)$ dans la formule du calcul de la profondeur verticale (h) du godet (12) peut être changé selon $l_i.(\cos(\theta_i).\sin(\beta_i)-\sin(\theta_i).\cos(\beta_i))$ où le terme mathématique entre parenthèses est une constante. La même opération est possible pour la formule du calcul de la profondeur horizontal (H) du godet (12) de façon à ce que la longueur $(L_i)$ inconnue puisse être directement utilisée par le système matriciel (SM).

Pour le cas où seulement la longueur $(L_i)$ est inchangée, nous posons $\hat{a}_i = \cos(\theta_i)$ et $\hat{b}_i = -\sin(\theta_i)$ pour réécrire le terme mathématique (Fr1) tel que $\hat{a}_i.l_i \sin(\beta_i) + \hat{b}_i.l_i \cos(\beta_i)$ et le terme mathématique correspondant pour calculer la profondeur horizontale (H) du godet (12) tel que $\hat{a}_i.l_i \cos(\beta_i) - \hat{b}_i.l_i \sin(\beta_i)$.

Ayant résolu le système résultant avec les paramètres inconnus $\hat{a}_i$ et $\hat{b}_i$ à la place de $a_i$ et $b_i$, le décalage angulaire $(\theta_i)$ peut être calculé soit via $\theta_i = \arccos(\hat{a}_i)$ ou $\theta_i = -\arcsin(\hat{b}_i)$. Malheureusement à cause des erreurs dans les données d'entrées, en particulier l'erreur dans la longueur $(L_i)$, les deux résultats seront toujours les mêmes. Le meilleur compromis introduisant l'erreur supplémentaire la plus petite est de calculer le décalage angulaire selon la

formule suivante $\theta_i = -\arctan(\dfrac{\hat{b}_i}{\hat{a}_i})$.

Il est à noter que les paramètres inchangés et entrés comme constantes dans la procédure de recalibration introduisent des erreurs supplémentaires. Les paramètres déterminés durant une calibration entière de l'engin d'excavation (1) peuvent être très inexactes. Ces erreurs influenceront lourdement l'exactitude des organe(s) et/ou dispositif (s) détecteur(s) recalibré(s). Le meilleur procédé serait de faire une calibration entière de l'engin d'excavation (1) même si seulement quelques paramètres ont changé. De façon avantageuse, cela permettrait d'améliorer l'exactitude des paramètres déjà connus.

Une fois déterminés et éventuellement après élimination des données d'entrées erronées (1004), les paramètres ($L_i$, $\theta_i$) sont éventuellement validés par l'opérateur via un test. Ce test consiste à positionner l'outil de travail (12) sur un plan de référence puis à vérifier que la profondeur horizontale et/ou verticale de l'outil de travail (12) ne sont pas modifiées.

Ensuite, les paramètres ($L_i$, $\theta_i$) sont mémorisés (1005) dans la mémoire (133) du système de calibration (13) de l'engin (1) de façon à ce qu'ils puissent être utilisés pour la commande (1006) de l'affichage de voyants lumineux servant à guider l'opérateur pour réaliser son travail d'excavation à une profondeur horizontale (H) et/ou verticale (h) du godet (12) déterminée.

Nous allons, à présent décrire, l'utilisation des paramètres ($L_i$, $\theta_i$) déterminés via le procédé de calibration décrit précédemment.

L'utilisation des paramètres de calibration ($L_i$, $\theta_i$) consiste à commander, au moyen d'un module de commande de l'affichage (134) prévu dans un système de guidage de l'engin (1), l'affichage de voyants lumineux prévus sur l'interface utilisateur du système de guidage de l'engin (1). Ces voyants lumineux sont, par exemple, des flèches orientées vers le haut ou vers le bas et des flèches orientées vers la gauche ou vers la droite. Une fois la calibration déterminée, l'opérateur choisit un profil de travail ou d'excavation. Ensuite, l'opérateur déplace, au moyen de ces manettes de commandes (131c), l'extrémité du godet (12) en fonction des informations fournies par les voyants lumineux. En effet, les voyants lumineux permettent de guider l'opérateur lors du déplacement de l'outil de travail (12). La commande des voyants lumineux est déterminée par les informations fournies par le module de calcul (132) du système de calibration (13) qui calcule, au moyen des paramètres de calibration ($L_i$, $\theta_i$) et d'un plan ou ligne de référence par exemple, une ligne laser horizontale de référence, la profondeur verticale et/ou horizontale du godet (12) à chacun de ces déplacements puis compare la profondeur verticale et/ou horizontale mesurée par rapport aux données contenues dans le profil choisi par l'opérateur.

Dans le cas où les plans ou lignes de référence servant à la commande de l'outil de travail (12) sont réalisés par des dispositifs lasers, un dispositif récepteur laser (14) peut être disposé de façon imprécise sur un des bras articulé (10, 11) de l'engin (1) pour détecter une hauteur d'un plan ou ligne laser de référence. Dans l'exemple représenté à la figure 3, ce dispositif (14) est positionné sur le bras de support (10). Ce dispositif récepteur laser (14) comprend un module de communication sans fil pour envoyer le ou les signaux d'émission (Sg') et ainsi transmettre des données de détection de faisceau laser au système de guidage de l'engin (1). Le dispositif récepteur laser (14) peut être autonome de la même façon que les dispositifs détecteurs de position angulaire (20, 21, 22) et comprend par exemple :

- une cellule de réception linéaire laser incluant des photodiodes alignées (récepteur laser linéaire),

- une alimentation par panneau(x) solaire(s) chargeant une batterie,

- un transmetteur radio prévu dans le module de communication sans fil pour envoyer des données par radio, et

- une face d'accolage à aimant(s).

Le système de guidage de l'engin (1) reçoit les données fournies par le dispositif récepteur laser (14). Ces données sont représentatives de la détection de hauteur du plan laser de référence. La linéarité du récepteur laser permet de capter le faisceau sur une plus grande hauteur, et par conséquent de ne pas arrêter le mouvement du bras (10 ou 11) pour la détection. Une photodiode intermédiaire peut être considérée comme un capteur de référence et les photodiodes placées plus haut, respectivement plus bas par rapport à cette référence sont chacune associées à un incrément, respectivement un décrément d'ajustement en hauteur. Alternativement, un récepteur (à bas coût et moins précis) peut disposer simplement d'une cellule non linéaire, avec éventuellement un système de lentille pour augmenter la zone de détection. L'une ou l'autre de ces options peuvent être retenues selon les besoins.

Dans ce dernier cas, il est nécessaire de réaliser une étape additionnelle au procédé de calibration permettant de déterminer les paramètres inconnus axiale et longitudinale de position du dispositif récepteur laser (14) sur son élément articulé (10 ou 11). Cette étape est similaire au procédé de calibration décrit précédemment. Cette étape consiste à réaliser, pour différentes configurations angulaires prises par les éléments articulés (10, 11) et l'outil de travail (12), le croisement entre le plan ou ligne de référence et l'extrémité de l'outil de travail (12), puis le croisement de ce même plan ou ligne de référence avec le dispositif récepteur laser (14), pour fournir au module de calcul (132) du système de calibration (13) de l'engin (1) une série d'équations liant la position du dispositif détecteur laser (14) à la géométrie du système formé par les éléments articulés (10, 11) et l'outil de travail (12). Puis, le module de calcul (132) du système de calibration (13) est apte à déterminer, via un programme approprié de résolution d'équations mathématiques, les paramètres inconnus axiale et longitudinale de position du dispositif récepteur laser (14) sur son élément articulé .

En référence à la figure 9, nous allons à présent décrire le système de calibration automatique (13) d'un engin de terrassement (1).

Ce système de calibration automatique (13) est équipé d'un boîtier sur la face avant duquel est prévue l'interface utilisateur (131) équipée de l'écran d'affichage (131 a) associé au clavier (131 c).

Le système de calibration automatique (13) comprend, à l'intérieur du boîtier, le récepteur de communication sans fil (130) destiné à recevoir les signaux (Sg) représentatifs des données de positions angulaires ($\beta_i$) transmis par les différents dispositifs détecteurs (20, 21, 22).

Le système de calibration automatique (13) comprend, à l'intérieur du boîtier, la mémoire (133) destinée à stocker les données mesurées par les dispositifs détecteurs (20, 21, 22), les données d'entrées connues saisies par l'opérateur sur le clavier (131b) de l'interface utilisateur (131), ainsi que les paramètres de calibration ($L_i$, $\theta_i$) une fois déterminés.

En outre, le système de calibration automatique (13) comprend, à l'intérieur du boîtier, le module de calcul (132) destiné, au moyen du programme approprié de résolution d'équations mathématiques, à calculer et déterminer les paramètres inconnus ($L_i$ et $\theta_i$), au moyen des données d'entrées connues mémorisées dans la mémoire (133) et des données de positions angulaires ($\beta_i$) mesurées. En outre, le module de calcul (132) est apte à fournir des informations calculées au moyen des paramètres de calibration déterminés ($L_i$ et $\beta_i$) et du ou des profils de travail choisi(s) par l'opérateur, à un module de commande (134) de l'affichage des voyants lumineux du système de guidage pour guider l'opérateur lors du déplacement du godet (12).

Le système de guidage de l'engin (1) comprend le module de commande (134) de l'affichage de voyants lumineux servant à guider l'opérateur lors du déplacement du godet (12) et une interface utilisateur équipée de voyants lumineux servant à guider l'opérateur lors du déplacement de l'outil de travail (12) après la calibration.

L'écran (131 a) commun au système de calibration (13) et au système de guidage de l'engin (1) permet d'afficher les différents profils pouvant être choisi par l'opérateur pour la commande de l'outil de travail (12), le profil choisi et les informations nécessaires à la calibration de l'outil de travail (12). Le clavier (131b) commun au système de calibration (13) et au système de guidage de l'engin (1) permet à l'opérateur de choisir le profil d'excavation, de saisir les informations relatives aux données d'entrées connues et la validation des paramètres ($L_i$ ou $\theta_i$) de calibration ainsi que des consignes de commande de l'outil de travail (12).

Un tel système de calibration automatique (13) est disposé dans la cabine de l'engin de terrassement (1).

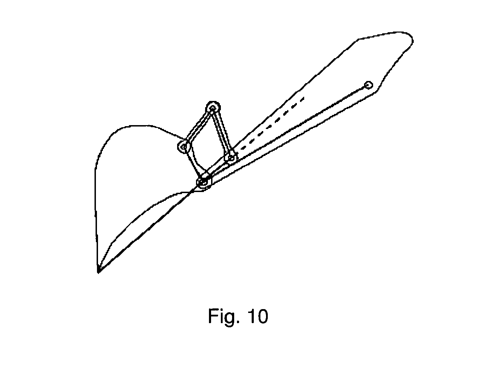

En référence à la figure 10, il est à noter que le dispositif détecteur (22) disposé sur le godet (12) peut dans certains cas, être disposé sur un des éléments formant le compas (121) d'articulation entre le godet (12) et le bras de godet (11). En effet, en disposant le dispositif détecteur (22) directement sur le godet (12), le dispositif détecteur (22) peut par exemple être détérioré lors de l'excavation. Dans le cas où le dispositif détecteur (22) est disposé sur un des éléments formant le compas (121) d'articulation entre le godet (12) et le bras de godet (11), il est nécessaire de réaliser une étape préalable au procédé de calibration décrit précédemment, consistant à déplacer un des dispositifs détecteurs (20, 21) sur le godet (12) puis à déplacer en rotation le godet (12) autour de son axe d'articulation sur différents points de référence. Pour chaque déplacement du godet (12), le dispositif détecteur (22) disposé sur un des éléments du compas (121) et le dispositif détecteur déplacé (20 ou 21) fournissent au système de calibration (13) les données de positions angulaires mesurées. Le module de calcul (132) du système de calibration (13) effectue au moyen d'un programme approprié, une comparaison entre les données de position angulaires fournies pas ces dispositifs détecteurs de façon à obtenir une relation mathématique servant à déterminer le décalage angulaire du dispositif détecteur disposé sur un des éléments formant le compas (121) d'articulation.

Il est à noter que le lecteur pourra pour plus de détails relatifs aux dispositifs détecteurs (20, 21, 22) et à l'engin d'excavation (1) muni de dispositifs détecteurs (20, 21, 22) se référé au document intitulé « Capteur autonome de position et système de détermination de position d'un outil d'engin de travaux via des capteurs de position » qui a reçu le numéro de dépôt FR 07 02 888.

Un des avantages de l'invention est que le procédé de calibration automatique d'un engin de travaux permet à un conducteur d'engins de travaux publics de préparer son engin au travail sans faire intervenir de technicien spécialisé.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de calibration automatique d'un engin de terrassement (1) équipé d'un bras (10, 11) articulé dans un plan et ne pouvant tourner autour de son axe de symétrie à l'extrémité duquel est positionné un outil de travail (12), **caractérisé en ce que** le procédé de calibration consiste, après une série de déplacements (1001) de l'extrémité de l'outil de travail (12) entre des points de référence n'appartenant pas à l'engin de terrassement disposés selon une configuration géométrique définie, de recueillir des données de positions angulaires ($\beta_i$) relatives aux différents organes articulés (10, 11, 12) de l'engin de terrassement (1), ces données de positions angulaires ($\beta_i$) étant délivrées par des dispositifs détecteurs (20, 21, 22) amovibles et interchangeables positionnés (1000) de façon imprécise sur chaque organe articulé (10, 11, 12) de l'engin puis envoyées (1002) par une communication sans fil à un système de calibration (13) de l'engin de terrassement (1) afin d'exécuter un module de calcul (132) du système de calibration (13) de l'engin (1) pour déterminer (1003) à l'aide de données d'entrées connues (1012) représentatives des points de référence, des paramètres inconnus représentatifs des imprécisions de positionnement des détecteurs.

2. Procédé de calibration selon la revendication 1, **caractérisé en ce que** les paramètres inconnus correspondent aux longueurs ($L_i$) des organes articulés de l'engin et aux décalages angulaires ($\theta_i$) de chaque dispositif détecteur (20, 21, 22) par rapport à l'organe articulé (10, 11, 12) sur lequel le dispositif détecteur (20, 21, 22) est positionné.

3. Procédé de calibration selon la revendication 1 ou 2, **caractérisé en ce que** l'étape (1003) de calcul et la détermination des paramètres inconnus ($L_i$, $\theta_i$) consiste à résoudre un système d'équations mathématiques au moyen d'un programme approprié de résolution d'équations mathématiques exécuté par le module de calcul (132) du système de calibration (13) de l'engin (1).

4. Procédé de calibration selon la revendication 3, **caractérisé en ce que** les équations mathématiques sont issues de relations mathématiques définissant les données représentatives de la position verticale et de la position horizontale de l'outil de travail (12) en fonction des paramètres inconnus.

5. Procédé de calibration selon une des revendications 1 à 4, **caractérisé en ce que** les données d'entrées connues pour une configuration géométrique donnée correspondent aux distances entre les plans et/ou lignes de référence sur lesquels sont positionnés les points de référence de ladite configuration géométrique et/ou aux distances entre les points de référence de ladite configuration géométrique et/ou éventuellement aux coordonnées des points de référence de ladite configuration géométrique, ces données d'entrées connues étant saisies (1011) par un opérateur puis mémorisées (1012) dans la mémoire (133) du système de calibration (13) pour correspondre à une position de l'extrémité de l'outil (12) en vue de leur utilisation pour le calcul des paramètres inconnus ($L_i$, $\theta_i$) en les associant avec les données de positions angulaires mesurées correspondantes à chaque position prise par l'extrémité de l'outil de travail (12).

6. Procédé de calibration selon la revendication 5, **caractérisé en ce que** les configurations géométriques correspondent à des combinaisons géométriques de plans ou lignes de référence verticaux ou horizontaux ou orientés selon un angle connu, sur lesquels sont positionnés au moins un point de référence, les plans ou lignes de référence des configurations géométriques étant obtenus au moyen d'un dispositif laser ou par le déplacement d'une tige sur laquelle sont positionnés des marqueurs correspondant aux points de référence ou encore par tout type de dispositif permettant de former un plan ou ligne de référence.

7. Procédé de calibration selon une des revendications 1 à 6, **caractérisé en ce que** la résolution du système d'équations mathématiques est effectuée par un programme exécuté par le module de calcul (132) du système de calibration (1) résolvant un système matriciel (SM) contenant pour la configuration géométrique donnée et pour chaque position de ladite configuration géométrique prise par l'extrémité de l'outil de travail (12), les données de positions angulaires ($\beta_i$) de chaque organe articulé (10, 11, 12) de l'engin (1) et les données d'entrées connues relatives à cette configuration géométrique ou utilisant une ou plusieurs méthodes mathématiques appropriées.

8. Procédé de calibration selon une des revendications 1 à 7, **caractérisé en ce que** le procédé de calibration peut comporter une étape de détermination et d'élimination (1004) des données de positions angulaires ($\beta_i$) erronées qui sont réalisées par un programme exécuté par le module de calcul (132) du système de calibration (1) en utilisant une ou plusieurs méthodes mathématiques appropriées, les données d'entrées connues associées aux données de positions angulaires ($\beta_i$) erronées étant éliminées de l'ensemble des données nécessaires pour le calcul des paramètres inconnus ($L_i$, $\theta_i$).

**9.** Procédé de calibration selon une des revendications 1 à 8, **caractérisé en ce que** dans le cas où le dispositif détecteur (22) est disposé sur un des éléments formant le compas (121) d'articulation entre l'outil de travail (12) et le bras de l'outil de travail (11), une étape préalable au procédé de calibration est éventuellement réalisée et consiste à déplacer un des dispositifs détecteurs (20 ou 21) sur l'outil de travail (12) puis à déplacer en rotation l'outil de travail (12) autour de son axe d'articulation sur différents points de référence, le dispositif détecteur (22) disposé sur un des éléments du compas (121) et le dispositif détecteur déplacé (20 ou 21) fournissant, pour chaque déplacement de l'outil de travail (12), au système de calibration (13) les données de positions angulaires mesurées puis le module de calcul (132) du système de calibration (13) effectuant au moyen d'un programme approprié, une comparaison entre les données de positions angulaires ($\beta_i$) fournies pas ces dispositifs détecteurs de façon à obtenir une relation mathématique servant à déterminer le décalage angulaire du dispositif détecteur (22) disposé sur un des éléments formant le compas (121) d'articulation.

**10.** Système de calibration automatique (13) d'un engin de terrassement (1) équipé d'un bras (10, 11) articulé à l'extrémité duquel est positionné un outil de travail (12), un dispositif détecteur (20, 21, 22) autonome équipé de capteur(s) de position angulaire étant positionné de façon imprécise, amovible et interchangeable sur chaque organe articulé (10, 11, 12), le système de calibration (13) permettant de mettre en oeuvre le procédé de calibration automatique selon une des revendications 1 à 9, **caractérisé en ce que** le système de calibration (13) comporte un boîtier sur la face avant duquel est prévue une interface utilisateur (131) équipée d'un écran d'affichage (131a) associé à un clavier (131c) et d'un bouton de déclenchement de la mesure puis d'envoi et de mémorisation des données de positions angulaires ($\beta_i$) fournies par les dispositifs détecteurs (20, 21, 22), le boîtier comportant à l'intérieur :

- un récepteur de communication sans fil (130) destiné à recevoir les signaux (Sg) représentatifs des données de positions angulaires ($\beta_i$) transmis par les différents dispositifs détecteurs (20, 21, 22) ;
- une mémoire (133) destinée à stocker les données mesurées par les dispositifs détecteurs (20, 21, 22), les données d'entrées connues saisies par l'opérateur sur le clavier (131b) de l'interface utilisateur (131), ainsi que les paramètres de calibration ($L_i$, $\theta_i$) une fois déterminés ;
- un module de calcul (132) destiné, au moyen d'un programme approprié de résolution d'équations mathématiques, à calculer et déterminer les paramètres inconnus ($L_i$ et $\theta_i$), au moyen des données d'entrées connues et mémorisées dans la mémoire (133) et des données de positions angulaires ($\beta_i$) mesurées et reçues.

**11.** Système de calibration (13) selon la revendication 10, **caractérisé en ce qu'**après la calibration, le module de calcul (132) est apte à fournir des informations calculées au moyen des paramètres de calibration déterminés ($L_i$ et $\theta_i$) et de profil(s) de travail choisi(s) par l'opérateur à un module de commande (134) de l'affichage de voyants lumineux d'un système de guidage de l'engin (1) pour guider l'opérateur lors du déplacement du godet (12) ou de tout autre moyen d'affichage permettant l'assistance au conducteur.

**12.** Système de calibration (13) selon une des revendications 10 à 11, **caractérisé en ce que** l'écran (131 a), commun au système de calibration (13) et au système de guidage de l'engin (1), permet d'afficher différents profils pouvant être choisi par l'opérateur pour la commande de l'outil de travail (12) après la calibration, le profil choisi et les informations nécessaires à la calibration de l'outil de travail (12) et le clavier (131b), commun au système de calibration (13) et au système de guidage de l'engin (1), permet à l'opérateur de choisir le profil de travail, de saisir des informations relatives aux données d'entrées connues et de validation des paramètres ($L_i$ ou $\theta_i$) de calibration ainsi que des consignes de commande de l'outil de travail (12).

**13.** Système de calibration (13) selon une des revendications 10 à 12, **caractérisé en ce que** dans le cas où le dispositif détecteur (22) est disposé sur un des éléments formant le compas (121) d'articulation entre l'outil de travail (12) et le bras de l'outil de travail (11), le module de calcul (132) comporte un programme permettant avant la calibration de déterminer une relation mathématique pour déterminer le décalage angulaire du dispositif détecteur (22) disposé sur un des éléments formant le compas (121) d'articulation à partir de la comparaison de données de positions angulaires ($\beta_i$) fournies par le dispositif détecteur (22) disposé sur un des éléments du compas (121) et le dispositif détecteur déplacé (20 ou 21) sur l'outil de travail (12).

**14.** Engin de terrassement (1) équipé d'un bras (10, 11) articulé à l'extrémité duquel est positionné un outil de travail (12), **caractérisé en ce qu'**il comporte au moins un dispositif détecteur (20, 21, 22) autonome équipé de capteur (s) de position angulaire à communication sans fil, le dispositif détecteur (20, 21, 22) étant positionné de façon imprécise, amovible et interchangeable sur chaque organe articulé (10, 11, 12), des manettes de commandes (131c) pour commander manuellement l'engin (1) et un système de calibration automatique (13) selon une des revendications 10 à 13, disposé dans la cabine de l'engin de terrassement (1).

**15.** Engin de terrassement (1) selon la revendication 14, **caractérisé en ce qu'**un détecteur laser peut être disposé à l'extrémité de l'outil de travail (12) pour déterminer le moment où l'extrémité de l'outil de travail (12) est positionnée sur un point de référence d'un plan ou ligne laser de référence servant à la calibration et ainsi déclencher automatiquement la mesure puis l'envoi et la mémorisation des données de position angulaires ($\beta_i$) fournies par les dispositifs détecteurs (20, 21, 22), dans le cas où les plans ou lignes de référence des configurations géométriques définies servant à la calibration sont réalisés par des dispositifs lasers.

**16.** Engin de terrassement (1) selon la revendication 15, **caractérisé en ce que** le dispositif détecteur est équipé d'un module de communication pour envoyer un ou des signaux de déclenchement de mesure des données de position angulaires à destination des dispositifs détecteurs (20 21 22).

**17.** Engin de terrassement (1) selon la revendication 14, **caractérisé en ce qu'**un dispositif récepteur laser (14) peut être disposé de façon imprécise sur un des bras articulés (10 ou 11) de l'engin (1) pour détecter une hauteur d'un plan ou ligne laser de référence, dans le cas où des plans ou lignes lasers de référence servent à la commande de l'outil de travail (12) après la calibration.

**18.** Engin de terrassement (1) selon la revendication 17, **caractérisé en ce que** le dispositif récepteur laser (14) comprend un module de communication pour envoyer le ou les signaux d'émission (Sg') et ainsi transmettre des données de détection de faisceau laser à un système de guidage de l'engin (1).

**19.** Procédé de calibration selon les revendications 1 et 6, **caractérisé en ce que** le plan ou ligne de référence est réalisé par un dispositif laser et détecté par un dispositif récepteur laser (14) disposé sur un des éléments articulés (10, 11) de l'engin (1), cette détection pouvant nécessiter une étape, additionnelle à la calibration, de détermination des positions axiale, longitudinale.

**20.** Procédé de calibration selon la revendication 19, **caractérisé en ce que** l'étape additionnelle à la calibration consiste à réaliser, pour différentes configurations angulaires prises par les éléments articulés (10, 11) et l'outil de travail (12), le croisement entre le plan ou ligne de référence et l'extrémité de l'outil de travail (12), puis le croisement de ce même plan ou ligne de référence avec le dispositif récepteur laser (14) pour fournir au module de calcul (132) du système de calibration (13) de l'engin (1) une série d'équations liant la position du dispositif détecteur laser (14) à la géométrie du système formé par les éléments articulés (10, 11) et l'outil de travail (12), le module de calcul (132) du système de calibration (13) étant apte à déterminer, via un programme approprié de résolution d'équations mathématiques, les paramètres inconnus axiale et longitudinale de position du dispositif récepteur laser (14) sur son élément articulé (10 ou 11).

```
┌─────────────────────────┐
│ Positionement des capteurs │
│  sur les organes articulés │
│    de l'engin (1000)      │
└─────────────────────────┘
             │
             ▼
┌─────────────────────────┐
│ Commande du déplacement │
│ de l'extrémité de l'outil de travail │
│    de l'engin (1001)      │
└─────────────────────────┘
             │
             ▼
```

┌──────────────────┐      ┌─────────────────────────┐
│ Saisie de        │      │ Envoi des données mesurées │
│ données          │      │ au système de calibration (1002) │
│ connues          │      └─────────────────────────┘
│ via l'interface  │                   │
│ utilisateur      │                   ▼
│ (1011)           │
└──────────────────┘
        │
        ▼
┌──────────────────┐      ┌─────────────────────────┐
│ Mémorisation     │      │ Calcul et détermination │
│ des données      │─────▶│    des paramètres       │
│ connues          │      │    inconnus (1003)      │
│ saisies          │      └─────────────────────────┘
│ (1012)           │                   │
└──────────────────┘                   ▼

```
┌─────────────────────────┐
│ Elimination des données │
│    erronées (1004)       │
└─────────────────────────┘
             │
             ▼
┌─────────────────────────┐
│ Mémorisation            │
│ des paramètres          │
│ de calibration (1005)   │
└─────────────────────────┘
             │
             ▼
┌─────────────────────────┐
│ Commande de l'affichage │
│ de voyants lumineux (1006) │
└─────────────────────────┘
```

Fig. 1

EP 2 103 745 A1

Fig. 2

Fig. 3

26

EP 2 103 745 A1

Fig. 4

Fig. 5a

Fig. 5b

Fig. 5c

Fig. 5

Fig. 6a

Fig. 6b

Fig. 6

Fig. 7a

Fig. 7b

Fig. 7c

Fig. 7

Fig. 8a

Fig. 8b

Fig. 8

Fig. 9

Fig. 10

Europäisches
Patentamt

European
Patent Office

Office européen
des brevets

**RAPPORT DE RECHERCHE EUROPEENNE**

Numéro de la demande

EP 09 29 0166

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P, D | EP 1 983 305 A (AGATEC [FR]) 22 octobre 2008 (2008-10-22) * alinéas [0034] - [0038]; figures 2,5 * ----- | 10-18 | INV. E02F3/43 E02F9/20 E02F9/26 B25J9/16 G01B21/04 |
| A | US 5 724 264 A (ROSENBERG LOUIS B [US] ET AL) 3 mars 1998 (1998-03-03) * abrégé; figures 1,5 * * colonne 14, ligne 22 - ligne 30 * * colonne 16, ligne 55 - colonne 17, ligne 50 * ----- | 1-9,19, 20 | |
| A | US 2006/243180 A1 (SUNDERMEYER JEFFRY N [US] ET AL) 2 novembre 2006 (2006-11-02) * alinéas [0039], [0128], [0145], [0146]; figures 1,2 * ----- | 1,10,14 | |
| A | EP 0 605 050 A (KONINKL PHILIPS ELECTRONICS NV [NL]) 6 juillet 1994 (1994-07-06) * abrégé; figures 1,2 * * page 2, ligne 39 - page 3, ligne 55 * * pages 7,8 * ----- | 1,10 | |
| A | WO 96/30171 A (ASEA BROWN BOVERI [SE]; SNELL JOHN ERIK [SE]) 3 octobre 1996 (1996-10-03) * abrégé; figures 1,3a-3c * * page 6, ligne 19 - ligne 28 * * page 7, ligne 14 - ligne 21 * * page 10, ligne 15 - ligne 23 * ----- | 1,10 | |
| A | EP 0 736 752 A (ASCOREL CONTROLE ET REGULATION [FR]) 9 octobre 1996 (1996-10-09) * revendication 1; figure 1 * ----- | 1,10,14 | |

**DOMAINES TECHNIQUES RECHERCHES (IPC)**

E02F
A01G
B66C
B25J
G01B
G01C
G05D

Le présent rapport a été établi pour toutes les revendications

| Lieu de la recherche | Date d'achèvement de la recherche | Examinateur |
|---|---|---|
| Munich | 3 juin 2009 | Bultot, Coralie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0166

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-06-2009

| Document brevet cité au rapport de recherche | | Date de publication | Membre(s) de la famille de brevet(s) | | Date de publication |
|---|---|---|---|---|---|
| EP 1983305 | A | 22-10-2008 | FR | 2915279 A1 | 24-10-2008 |
| US 5724264 | A | 03-03-1998 | AUCUN | | |
| US 2006243180 | A1 | 02-11-2006 | AUCUN | | |
| EP 0605050 | A | 06-07-1994 | JP | 6230812 A | 19-08-1994 |
| WO 9630171 | A | 03-10-1996 | DE | 69602745 D1 | 08-07-1999 |
| | | | DE | 69602745 T2 | 16-03-2000 |
| | | | EP | 0824393 A1 | 25-02-1998 |
| | | | ES | 2136398 T3 | 16-11-1999 |
| | | | JP | 11502776 T | 09-03-1999 |
| | | | SE | 508161 C2 | 07-09-1998 |
| | | | SE | 9501137 A | 01-10-1996 |
| | | | US | 5907229 A | 25-05-1999 |
| EP 0736752 | A | 09-10-1996 | DE | 59509448 D1 | 30-08-2001 |
| | | | ES | 2161794 T3 | 16-12-2001 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6140747 A

- FR 0702888